# EUROPEAN PATENT APPLICATION

(11) **EP 4 047 035 A1**
(43) Date of publication of application: **24.08.2022**
(21) Application number: 20876031.4
(22) Date of filing: 16.10.2020
(51) Int. Cl.: C08G 65/336, C08G 77/24, C09D 183/08, C09K 3/18

(54) **SURFACE TREATMENT AGENT**

(30) Priority: 18.10.2019 US 201962916823 P; 08.11.2019 JP 2019203570
(71) Applicant: Daikin Industries, Ltd., Osaka-shi, Osaka 530-8323 (JP); Momentive Performance Materials Inc., Waterford, NY 12188 (US)
(72) Inventor: MITSUHASHI, Hisashi, Osaka-shi, Osaka 530-8323 (JP); NOMURA, Takashi, Osaka-shi, Osaka 530-8323 (JP); MATSUI, Motoshi, Osaka-shi, Osaka 530-8323 (JP); OZAWA, Kaori, Osaka-shi, Osaka 530-8323 (JP); SHEN, Hao, Verona, New Jersey 07044 (US); CHAVES, Antonio, New York 10514 (US); WUSIK, Martin, Danbury, Connecticut 06811 (US); MCKINSTRY, Amy Hua, Danbury, Connecticut 06811 (US)
(74) Representative: Hoffmann Eitle
(86) International application number: PCT/JP2020/039165
(87) International publication number: WO 2021/075569

(57) **Abstract**

The present invention provides a surface-treating agent comprising (1) a fluoroalkylsilane oligomer mixture; and (2) a perfluoroalkyl group-containing silane compound.

## Description

### Technical Field

The present disclosure relates to a surface-treating agent.

### Background Art

Certain types of fluorine-containing silane compounds are known to be capable of providing excellent water-repellency, oil-repellency, antifouling properties, and the like when used in surface treatment of a substrate. A layer obtained from a surface-treating agent containing a fluorine-containing silane compound (hereinafter, also referred to as a "surface-treating layer") is applied as a so-called functional thin film to a large variety of substrates such as glass, plastics, fibers, sanitary articles, and building materials (Patent Literatures 1 and 2) .

### Citation List

### Patent Literature

Patent Literature 1: JP 2014-218639 A
Patent Literature 2: JP 2017-082194 A

### Summary of Invention

### Technical Problem

The fluorine-containing silane compound described in Patent Literature 1 or Patent Literature 2 can provide a surface-treating layer having an excellent function, but a surface-treating layer having higher friction durability is required.

An object of the present disclosure is to provide a surface-treating agent capable of providing a surface-treating layer having higher friction durability.

### Solution to Problem

The present disclosure includes the following embodiments.
[1] A surface-treating agent comprising:
   (1) a fluoroalkylsilane oligomer mixture; and
   (2) a perfluoroalkyl group-containing silane compound, wherein the fluoroalkylsilane oligomer mixture comprises a partially hydrolyzed condensate of a fluoroalkylsilane compound represented by the following formula (I):

      R^{f1}-Q¹-SiR¹ₚX¹₃₋ₚ (I)

      wherein
      R^{f1} is C₁F₂₁₊₁;
      1 is an integer of 1 to 10;
      Q¹ is a single bond or a divalent hydrocarbon group having 1 to 6 carbon atoms;
      R¹ is each independently a monovalent hydrocarbon group having 1 to 6 carbon atoms;
      X¹ is each independently a hydroxyl group or a hydrolyzable group; and
      p is an integer of 0 to 2, and
      the perfluoroalkyl group-containing silane compound is a compound represented by the following formula (II):

         [A]_{b1}Q² [B]_{b2} (II)

         wherein
      Q² is a linking group having a valence of (b1+b2);
      A is a group represented by R^{f3}-O-R^{f2}-;
      R^{f2} is a poly(oxyfluoroalkylene) chain;
      R^{f3} is a perfluoroalkyl group;
      B is a monovalent group having one -R¹²-(SiR²ᵣX²₃₋ᵣ) and no fluorine atoms;
      R¹² is a hydrocarbon group having 2 to 10 carbon atoms which optionally have an ethereal oxygen atom between carbon atoms or at the end opposite the end to which Si is bonded, or optionally have -NH- between carbon atoms;
      R² is each independently a hydrogen atom or an optionally substituted monovalent hydrocarbon group having 1 to 6 carbon atoms;
      X² is each independently a hydroxyl group or a hydrolyzable group;
      r is an integer of 0 to 2;
      Q² and B do not contain a cyclic siloxane structure;
      b1 is an integer of 1 to 3; and
      b2 is an integer of 2 to 9;
      provided that, when b1 is two or more, b1 number of A may be the same or different, and b2 number of B may be the same or different.
[2] The surface-treating agent according to [1], wherein R^{f2} in the formula (II) is a group represented by -(CaF₂aO)ₙ-, wherein a is an integer of 1 to 6, n is an integer of 2 or more, and each -CaF₂aO- unit may be the same or different.
[3] The surface-treating agent according to [1] or [2], wherein R^{f2} in the formula (II) is a group represented by - (CF₂CF₂CF₂CF₂CF₂CF₂O)ₙ₁-(CF₂CF₂CF₂CF₂CF₂O)ₙ₂-(CF₂CF₂CF₂CF₂O)ₙ₃-(CF₂CF₂CF₂O)ₙ₄-(CF(CF₃)CF₂O)ₙ₅-(CF₂CF₂O)ₙ₆-(CF₂O)ₙ₇-wherein n1, n2, n3, n4, n5, n6, and n7 are each independently an integer of 0 or more, the sum of n1, n2, n3, n4, n5, n6, and n7 is 2 or more, and each repeating unit may be present in a block, alternating, or random manner.
[4] The surface-treating agent according to any one of [1] to [3], wherein the fluoroalkylsilane compound represented by the formula (I) is a compound represented by the formula (I-1) or (I-2)

   CF₃(CF₂)ₗ₋₁-(CH₂)ₜ-SiX¹₃ (I-1)

   CF₃(CF₂)ₗ₋₁-(CH₂)ₜ-SiR¹X¹₂ (I-2)

   wherein 1 is an integer of 1 to 10, t is an integer of 1 to 6, and X¹ and R¹ have the same meaning as described above in [1] .
[5] A surface-treating agent comprising:
   (1) a fluoroalkylsilane oligomer mixture; and
   (2) a perfluoroalkyl group-containing silane compound, wherein the fluoroalkylsilane oligomer mixture comprises a partially hydrolyzed condensate of a fluoroalkylsilane compound represented by the following formula (I):

      R^{f1}-Q¹-SiR¹ₚX¹₃₋ₚ (I)

      wherein
      R^{f1} is C₁F₂₁₊₁;
      1 is an integer of 1 to 10;
      Q¹ is a single bond or a divalent hydrocarbon group having 1 to 6 carbon atoms;
      R¹ is each independently a monovalent hydrocarbon group having 1 to 6 carbon atoms;
      X¹ is each independently a hydroxyl group or a hydrolyzable group; and
      p is an integer of 0 to 2, and
      the perfluoroalkyl group-containing silane compound is a compound represented by any of the following formulae (A1), (A2), (B1), (B2), (C1), and (C2):

         (Rf-PFPE)_{β'}-X⁵-(SiR²¹ₙ₁R²²₃₋ₙ₁)_{β} ··· (A1)

         (R²²₃₋ₙ₁R²¹ₙ₁Si)_{β}-X⁵-PFPE-X⁵-(SiR²¹ₙ₁R²²₃₋ₙ₁)_{β} ... (A2)

         (Rf-PFPE)_{γ'}-X⁷-(SiR^{a}ₖ₁R^{b}ₗ₁R^{c}ₘ₁)_{γ} ... (B1)

         (R^{c}ₘ₁R^{b}ₗ₁R^{a}ₖ₁Si)_{γ}-X⁷-PFPE-X⁷-(SiR^{a}ₖ₁R^{b}ₗ₁R^{c}ₘ₁)_{γ} ... (B2)

         (Rf-PFPE)_{δ'}-X⁹-(CR^{d}ₖ₂R^{e}ₗ₂R^{f}ₘ₂)_{δ} ... (C1)

         (R^{f}ₘ₂R^{e}ₗ₂R^{d}ₖ₂C)_{δ}-X⁹-PFPE-X⁹-(CR^{d}ₖ₂R^{e}ₗ₂R^{f}ₘ₂)_{δ} ... (C2)

         wherein
      PFPE is each independently at each occurrence a group represented by formula:

         -(OC₄F₈)ₐ-(OC₃F₆)_{b}-(OC₂F₄)_{c}-(OCF₂)_{d}-

         wherein a, b, c, and d are each independently an integer of 0 to 200, the sum of a, b, c, and d is at least 1, and the occurrence order of the respective repeating units enclosed in parentheses provided with subscripts a, b, c, and d is not limited in the formula;
      Rf is each independently at each occurrence an alkyl group having 1 to 16 carbon atoms, optionally substituted with one or more fluorine atoms;
      R²¹ is each independently at each occurrence a hydroxyl group or a hydrolyzable group;
      R²² is each independently at each occurrence a hydrogen atom or an alkyl group having 1 to 22 carbon atoms;
      n1 is an integer of 0 to 3 independently in each (-SiR²¹ₙ₁R²²₃₋ₙ₁) unit;
      provided that at least one n1 in formulae (A1) and (A2) is an integer of 1 to 3;
      X⁵ each independently represents a single bond or a di- to decavalent organic group;
      β is each independently an integer of 1 to 9;
      β' is each independently an integer of 1 to 9;
      X⁷ each independently represents a single bond or a di- to decavalent organic group;
      γ is each independently an integer of 1 to 9;
      γ' is each independently an integer of 1 to 9;
      R^{a} is each independently at each occurrence -Z¹-SiR⁷¹ₚ₁R⁷²_{q1}R⁷³ᵣ₁;
      Z¹ is each independently at each occurrence an oxygen atom or a divalent organic group;
      R⁷¹ is each independently at each occurrence R^{a'};
      R^{a'} has the same meaning as R^{a};
      in R^{a}, the number of Si atoms linearly linked via a group Z¹ is at most 5;
      R⁷² is each independently at each occurrence a hydroxyl group or a hydrolyzable group;
      R⁷³ is each independently at each occurrence a hydrogen atom or a lower alkyl group;
      p1 is each independently at each occurrence an integer of 0 to 3;
      q1 is each independently at each occurrence an integer of 0 to 3;
      r1 is each independently at each occurrence an integer of 0 to 3;
      provided that at least one q1 in formulae (B1) and (B2) is an integer of 1 to 3;
      R^{b} is each independently at each occurrence a hydroxyl group or a hydrolyzable group;
      R^{c} is each independently at each occurrence a hydrogen atom or a lower alkyl group;
      k1 is each independently at each occurrence an integer of 1 to 3;
      11 is each independently at each occurrence an integer of 0 to 2;
      m1 is each independently at each occurrence an integer of 0 to 2;
      provided that, in the unit enclosed in parentheses provided with γ, the sum of k1, l1 and m1 is 3;
      X⁹ each independently represents a single bond or a di- to decavalent organic group;
      δ is each independently an integer of 1 to 9;
      δ' is each independently an integer of 1 to 9;
      R^{d} is each independently at each occurrence -Z²-CR⁸¹ₚ₂R⁸²_{q2}R⁸³ᵣ₂ ;
      Z² is each independently at each occurrence an oxygen atom or a divalent organic group;
      R⁸¹ is each independently at each occurrence R^{d'};
      R^{d'} has the same meaning as R^{d};
      in R^{d}, the number of C atoms linearly linked via a group Z² is at most 5;
      R⁸² is each independently at each occurrence -Y-SiR⁸⁵ₙ₂R⁸⁶₃₋ₙ₂ ;
      Y is each independently at each occurrence a divalent organic group;
      R⁸⁵ is each independently at each occurrence a hydroxyl group or a hydrolyzable group;
      R⁸⁶ is each independently at each occurrence a hydrogen atom or a lower alkyl group;
      n2 represents an integer of 0 to 3 independently in each (-Y-SiR⁸⁵ₙ₂R⁸⁶₃₋ₙ₂) unit;
      provided that at least one n2 in formulae (C1) and (C2) is an integer of 1 to 3;
      R⁸³ is each independently at each occurrence a hydrogen atom, a hydroxyl group, or a lower alkyl group;
      p2 is each independently at each occurrence an integer of 0 to 3;
      q2 is each independently at each occurrence an integer of 0 to 3;
      r2 is each independently at each occurrence an integer of 0 to 3;
      R^{e} is each independently at each occurrence -γ-SiR⁸⁵ₙ₂R⁸⁶₃₋ₙ₂;
      R^{f} is each independently at each occurrence a hydrogen atom, a hydroxyl group, or a lower alkyl group;
      k2 is each independently at each occurrence an integer of 0 to 3;
      l2 is each independently at each occurrence an integer of 0 to 3; and
      m2 is each independently at each occurrence an integer of 0 to 3;
      provided that, in the formulae (C1) and (C2), at least one q2 is 2 or 3 or at least one l2 is 2 or 3.
[6] The surface-treating agent according to [5], wherein Rf is a perfluoroalkyl group having 1 to 16 carbon atoms.
[7] The surface-treating agent according to [5] or [6], wherein PFPE is a group represented by any of the following formulae (i) to (iv) :

   - (OCF₂CF₂CF₂)_{b}- (i)

   wherein b is an integer of 1 to 200;

   - (OCF(CF₃)CF₂)_{b}- (ii)

   wherein b is an integer of 1 to 200;

   - (OCF₂CF₂CF₂CF₂)ₐ-(OCF₂CF₂CF₂)_{b}-(OCF₂CF₂)_{c}-(OCF₂)_{d}- (iii)

   wherein a and b are each independently an integer of 0 or 1 to 30, c and d are each independently an integer of 1 to 200, and the occurrence order of the respective repeating units enclosed in parentheses provided with subscripts a, b, c, and d is not limited in the formula; or

   - (R⁷-R⁸)_{f}- (iv)

   wherein R⁷ is each independently at each occurrence OCF₂ or OC₂F₄, and R⁸ is each independently at each occurrence a group selected from OC₂F₄, OC₃F₆, and OC₄F₈, or a combination of two or three groups independently selected from these groups; and
   f is an integer of 2 to 100.
[8] The surface-treating agent according to any one of [5] to [7], wherein k1 is 3 and q1 in R^{a} is 3.
[9] The surface-treating agent according to any one of [5] to [8], wherein l2 is 3 and n2 is 3.
[10] The surface-treating agent according to any one of [5] to [9], wherein Y represents a C₁₋₆ alkylene group, -(CH₂)_{g'}-O-(CH₂)_{h'}-, wherein g' is an integer of 0 to 6 and h' is an integer of 0 to 6, or -phenylene-(CH₂)_{i'}-, wherein i' is an integer of 0 to 6.
[11] The surface-treating agent according to any one of [5] to [10], wherein X⁵, X⁷, and X⁹ are each independently a di- to tetravalent organic group, β, γ and δ are each independently 1 to 3, and β', γ' and δ ' are 1.
[12] The surface-treating agent according to any one of [5] to [11], wherein X⁵, X⁷, and X⁹ are a divalent organic group, β, γ and δ are 1, and β', γ' and δ' are 1.
[13] The surface-treating agent according to any one of [5] to [12], wherein X⁵, X⁷, and X⁹ are each independently a group represented by -(R³¹)_{p'}-(X^{a})_{q'}-
   wherein
   R³¹ each independently represents a single bond, - (CH₂)_{s'}-, wherein s' is an integer of 1 to 20, or an o-, m- or p-phenylene group;
   X^{a} represents -(X^{b})_{l'}-, wherein l' is an integer of 1 to 10;
   X^{b} is each independently at each occurrence a group selected from the group consisting of -O-, -S-, an o-, m- or p-phenylene group, -C(O)O-, -Si(R³³)₂-, -(Si(R³³)₂O)_{m'} - Si(R³³)₂-, wherein m' is an integer of 1 to 100, -CONR³⁴-, - O-CONR³⁴-, -NR³⁴- and -(CH₂)_{n'}-, wherein n' is an integer of 1 to 20;
   R³³ is each independently at each occurrence a phenyl group, a C₁₋₆ alkyl group, or a C₁₋₆ alkoxy group;
   R³⁴ is each independently at each occurrence a hydrogen atom, a phenyl group, or a C₁₋₆ alkyl group;
   p' is 0, 1, or 2;
   q' is 0 or 1;
   provided that at least one of p' and q' is 1, and the occurrence order of the respective repeating units in parentheses provided with p' or q' is not limited in the formula; and
   R³¹ and X^{a} are optionally substituted with one or more substituents selected from a fluorine atom, a C₁₋₃ alkyl group, and a C₁₋₃ fluoroalkyl group.
[14] The surface-treating agent according to any one of [5] to [13], wherein X⁵, X⁷, and X⁹ are each independently:
   a single bond, or -Rf'-X¹⁰-
   wherein X¹⁰ is a group selected from the group consisting of:
      -CH₂O(CH₂)₂-,
      -CH₂O(CH₂)₃- ,
      -CH₂O(CH₂)₆-,
      -CH₂O(CH₂)₃Si(CH₃)₂OSi(CH₃)₂(CH₂) ₂- ,
      -CH₂O(CH₂)₃Si(CH₃)₂OSi(CH₃)₂OSi(CH₃)₂(CH₂)₂-,
      -CH₂O(CH₂)₃Si(CH₃)₂O(Si(CH₃)₂O)₂Si(CH₃)₂(CH₂)₂-,
      -CH₂O(CH₂)₃Si(CH₃)₂O(Si(CH₃)₂O)₃Si(CH₃)₂(CH₂)₂-,
      -CH₂O(CH₂)₃Si(CH₃)₂O(Si(CH₃)₂O)₁₀Si(CH₃)₂(CH₂)₂-,
      -CH₂O(CH₂)₃Si(CH₃)₂O(Si(CH₃)₂O)₂₀Si(CH₃)₂(CH₂)₂-,
      -CH₂OCF₂CHFOCF₂- ,
      -CH₂OCF₂CHFOCF₂CF₂- ,
      -CH₂OCF₂CHFOCF₂CF₂CF₂-,
      -CH₂OCH₂CF₂CF₂OCF₂-,
      -CH₂OCH₂CF₂CF₂OCF₂CF₂- ,
      -CH₂OCH₂CF₂CF₂OCF₂CF₂CF₂- ,
      -CH₂OCH₂CF₂CF₂OCF(CF₃)CF₂OCF₂-,
      -CH₂OCH₂CF₂CF₂OCF(CF₃)CF₂OCF₂CF₂-,
      -CH₂OCH₂CF₂CF₂OCF(CF₃)CF₂OCF₂CF₂CF₂-,
      -CH₂OCH₂CHFCF₂OCF₂- ,
      -CH₂OCH₂CHFCF₂OCF₂CF₂-,
      -CH₂OCH₂CHFCF₂OCF₂CF₂CF₂- ,
      -CH₂OCH₂CHFCF₂OCF(CF₃)CF₂OCF₂-,
      -CH₂OCH₂CHFCF₂OCF(CF₃)CF₂OCF₂CF₂-,
      -CH₂OCH₂CHFCF₂OCF(CF₃)CF₂OCF₂CF₂CF₂-,
      CH₂OCH₂(CH₂)₇CH₂Si(OCH₃)₂OSi(OCH₃)₂(CH₂)₂Si(OCH₃)₂OSi(OCH₃)₂(CH₂ )₂-,
      -CH₂OCH₂CH₂CH₂Si(OCH₃)₂OSi(OCH₃)₂(CH₂)₃- ,
      -CH₂OCH₂CH₂CH₂Si(OCH₂CH₃)₂OSi(OCH₂CH₃)₂(CH₂)₃- ,
      -CH₂OCH₂CH₂CH₂Si(OCH₃)₂OSi(OCH₃)₂(CH₂)₂-,
      -CH₂OCH₂CH₂CH₂Si(OCH₂CH₃)₂OSi(OCH₂CH₃)₂(CH₂)₂-,
      -(CH₂)₂-,
      -(CH₂)₃-,
      -(CH₂)₄-,
      -(CH₂)₅-,
      -(CH₂)₆-,
      -(CH₂)₂-Si(CH₃)₂-(CH₂)₂-,
      -CONH- (CH₂) - ,
      -CONH-(CH₂)₂-,
      -CONH- (CH₂)₃-,
      -CON(CH₃) - (CH₂)₃-,
      -CON(Ph)-(CH₂)₃-, wherein Ph means phenyl,
      -CONH-(CH₂)₆-,
      -CON(CH₃) - (CH₂) ₆- ,
      -CON(Ph)-(CH₂)₆-, wherein Ph means phenyl,
      -CONH-(CH₂)₂NH(CH₂)₃-,
      -CONH-(CH₂)₆NH(CH₂)₃-,
      -CH₂O-CONH-(CH₂)₃-,
      -CH₂O-CONH-(CH₂)₆-,
      -S-(CH₂)₃-,
      -(CH₂)₂S(CH₂)₃-,
      -CONH-(CH₂)₃Si(CH₃)₂OSi(CH₃)₂(CH₂)₂-,
      -CONH-(CH₂)₃Si(CH₃)₂OSi(CH₃)₂OSi(CH₃)₂(CH₂)₂-,
      -CONH-(CH₂)₃Si(CH₃)₂O(Si(CH₃)₂O)₂Si(CH₃)₂(CH₂)₂-,
      -CONH-(CH₂)₃Si(CH₃)₂O(Si(CH₃)₂O)₃Si(CH₃)₂(CH₂)₂-,
      -CONH-(CH₂)₃Si(CH₃)₂O(Si(CH₃)₂O)₁₀Si(CH₃)₂(CH₂)₂-,
      -CONH-(CH₂)₃Si(CH₃)₂O(Si(CH₃)₂O)₂₀Si(CH₃)₂(CH₂)₂-,
      -C(O)O-(CH₂)₃-,
      -C(O)O-(CH₂)₆-,
      -CH₂-O-(CH₂)₃-Si(CH₃)₂-(CH₂)₂-Si(CH₃)₂-(CH₂)₂-,
      -CH₂-O-(CH₂)₃-Si(CH₃)₂-(CH₂)₂-Si(CH₃)₂-CH(CH₃)-,
      -CH₂-O-(CH₂)₃-Si(CH₃)₂-(CH₂)₂-Si(CH₃)₂-(CH₂)₃-,
      -CH₂-O-(CH₂)₃-Si(CH₃)₂-(CH₂)₂-Si(CH₃)₂-CH(CH₃)-CH₂-,
      -OCH₂-,
      -O(CH₂)₃-,
      -OCFHCF₂- ,

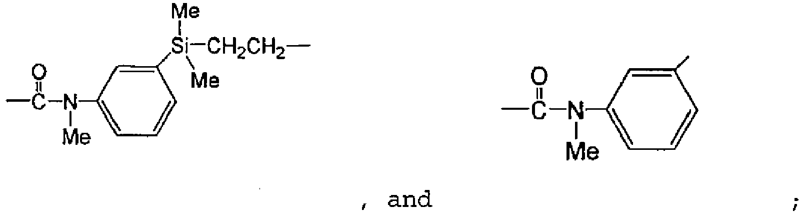

   Rf' is a single bond or -(C_{l'}F_{2l'})-; and
   l' is an integer of 1 to 4.
[15] The surface-treating agent according to any one of [5] to [10], wherein X⁵, X⁷, and X⁹ are each independently a tri- to decavalent organic group.
[16] The surface-treating agent according to [15], wherein X⁵, X⁷, and X⁹ are each independently selected from the group consisting of: 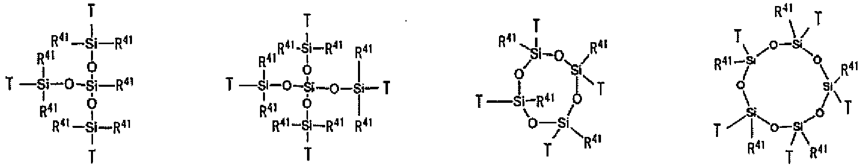 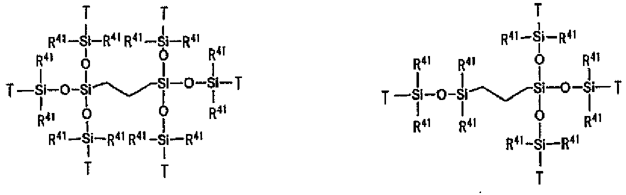 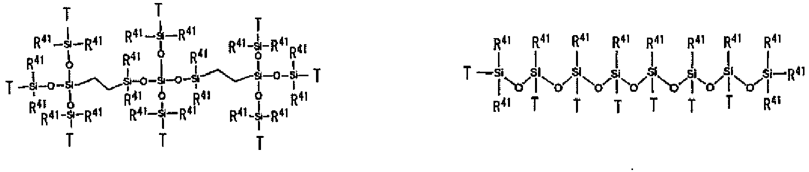 wherein in each group, at least one T is the following group bonded to PFPE in the formulae (A1), (A2), (B1), (B2), (C1) and (C2):
   a single bond, or -Rf'-X¹¹-
   wherein X¹¹ is a group selected from the group consisting of
      - CH₂O(CH₂)₂-,
      - CH₂O(CH₂)₃-,
      - CF₂O(CH₂)₃-,
      - (CH₂)₂-,
      - (CH₂)₃- ,
      - (CH₂)₄- ,
      - CONH-(CH₂)-,
      - CONH-(CH₂)₂-,
      - CONH-(CH₂)₃-,
      - CON(CH₃)-(CH₂)₃-, and
      - CON(Ph)-(CH₂)₃-, wherein Ph means phenyl, and

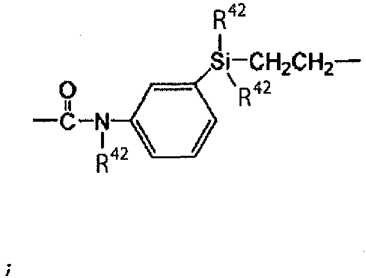

   Rf' is a single bond or - (C_{l'}F_{2l'})-; and
   l' is an integer of 1 to 4,
   at least one other T is - (CH₂)ₙ-, wherein n is an integer of 2 to 6, bonded to a carbon atom or a Si atom in the formulae (A1), (A2), (B1), (B2), (C1) and (C2), and the other T, if present, are each independently a methyl group, a phenyl group, an alkoxy group having 1 to 6 carbon atoms, or a radical scavenging group or a UV absorbing group,
   R⁴¹ is each independently a hydrogen atom, a phenyl group, an alkoxy group having 1 to 6 carbon atoms, or an alkyl group having 1 to 6 carbon atoms, and
   R⁴² each independently represents a hydrogen atom, a C₁₋₆ alkyl group, or a C₁₋₆ alkoxy group.
[17] The surface-treating agent according to any one of [1] to [16], wherein the number average molecular weight of the fluoroalkylsilane oligomer mixture is 300 or more.
[18] The surface-treating agent according to any one of [1] to [17], wherein the number average molecular weight of the fluoroalkylsilane oligomer mixture is 4,500 or less.
[19] The surface-treating agent according to any one of [1] to [18], wherein the content of the fluoroalkylsilane oligomer mixture is 20% by mass or less based on the total weight of the surface-treating agent.
[20] The surface-treating agent according to any one of [1] to [19], wherein the content of the fluoroalkylsilane oligomer mixture is 0.1% by mass or more based on the total weight of the surface-treating agent.
[21] An article comprising a substrate and a layer on a surface of the substrate, the layer being formed of the surface-treating agent according to any one of [1] to [20].
[22] The article according to [21], which is an optical member.

### Advantageous Effects of Invention

According to the present disclosure, it is possible to provide a surface-treating agent capable of providing a surface-treating layer having better friction durability.

### Description of Embodiments

Hereinafter, a surface-treating agent of the present disclosure will be described.

The term "hydrocarbon group", as used herein, represents a group that contains a carbon and a hydrogen and that is obtained by removing one hydrogen atom from a hydrocarbon. The hydrocarbon group is not limited, and examples include a hydrocarbon group that has 1 to 20 carbon atoms and that is optionally substituted with one or more substituents, such as an aliphatic hydrocarbon group and an aromatic hydrocarbon group. The "aliphatic hydrocarbon group" may be either linear, branched, or cyclic, and may be either saturated or unsaturated. The hydrocarbon group may contain one or more ring structures. The hydrocarbon group may have one or more of N, O, S, Si, amide, sulfonyl, siloxane, carbonyl, carbonyloxy, and the like at the terminal or in the molecular chain thereof.

The substituent of the "hydrocarbon group", as used herein, is not limited, and examples thereof include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The "di- to decavalent organic group", as used herein, means a di- to decavalent group containing carbon. The di- to decavalent organic group may be, but is not limited to, a di- to decavalent group obtained by further removing 1 to 9 hydrogen atoms from a hydrocarbon group. For example, the divalent organic group may be, but is not limited to, a divalent group obtained by further removing one hydrogen atom from a hydrocarbon group.

The surface-treating agent of the present disclosure contains: (1) a fluoroalkylsilane oligomer mixture; and (2) a perfluoroalkyl group-containing silane compound.

### [Fluoroalkylsilane Oligomer Mixture]

The fluoroalkylsilane oligomer mixture contained in the surface-treating agent of the present disclosure may contain a partially hydrolyzed condensate of a fluoroalkylsilane compound, and may further contain the fluoroalkylsilane compound itself.

The above fluoroalkylsilane compound is a fluoroalkylsilane compound represented by the following formula (I):

R^{f1}-Q¹-SiR¹ₚX¹₃₋ₚ (I)

wherein
R^{f1} is CₗF₂ₗ₊₁;
1 is an integer of 1 to 10;
Q¹ is a single bond or a divalent hydrocarbon group having 1 to 6 carbon atoms;
R¹ is each independently a monovalent hydrocarbon group having 1 to 6 carbon atoms;
X¹ is each independently a hydroxyl group or a hydrolyzable group; and
p is an integer of 0 to 2.

In the formula (I), R^{f1} is CₗF₂ₗ₊₁, wherein 1 is an integer of 1 to 10, preferably an integer of 1 to 8, more preferably an integer of 1 to 6, and for example, an integer of 2 to 6 or an integer of 3 to 6.

In the formula (I), Q¹ is a single bond or a divalent hydrocarbon group having 1 to 6 carbon atoms, and examples of the hydrocarbon group includes a linear or branched alkylene group and a group having an amide group or an ethereal oxygen atom between the carbon atoms of a linear or branched alkylene group having 2 to 6 carbon atoms. Of these, a linear alkylene group having 1 to 6 carbon atoms: -(CH₂)ₜ-(where t is an integer of 1 to 6) is preferable, more preferably -(CH₂)₂-, -(CH₂)₃-, or -(CH₂)₄-, and -(CH₂)₂- is particularly preferable, from the viewpoint of having excellent weather resistance.

In the formula (I), R^{l} is a monovalent hydrocarbon group having 1 to 6 carbon atoms, and includes a linear or branched alkyl group. Of these, a linear or branched alkyl group having 1 to 4 carbon atoms is preferable, and a methyl group or ethyl group is more preferable, from the viewpoint of availability. When a plurality is present, the R^{l}s may be the same or different, but they are preferably the same from the viewpoint of availability.

In the formula (I), X¹ is a hydroxyl group or a hydrolyzable group. Here, the "hydrolyzable group" as used herein refers to a group that can be eliminated from the main backbone of a compound by a hydrolysis reaction. Examples of the hydrolyzable group include -OR, -OCOR, -ON=CR₂, -NR₂, -NHR and halogen (in these formulae, R represents a substituted or unsubstituted alkyl group having 1 to 4 carbon atoms), and preferably is -OR (i.e., alkoxy group). Examples of R include an unsubstituted alkyl group such as a methyl group, an ethyl group, a propyl group, an isopropyl group, a n-butyl group and an isobutyl group; and a substituted alkyl group such as a chloromethyl group. Of them, an alkyl group, particularly, an unsubstituted alkyl group is preferable; and a methyl group or an ethyl group is more preferable. The hydroxyl group, although it is not limited, may be a group generated by hydrolyzation of a hydrolyzable group.

When X¹ is a chlorine atom, the reactivity is high and the hydrolysis reaction proceeds sufficiently even without adding an acid catalyst. Depending on applications, a compound where X¹ is a chlorine atom is preferably used.

In the formula (I), p is an integer of 0 to 2, and from the viewpoint of having excellent adhesion and durability, preferably 0 or 1, and more preferably 0.

Examples of the compound represented by the formula (I) include the following. The examples and preferable embodiments of l, t, X¹, and R¹ in the formula are as described above.

Formula (I-1) : CF₃(CF₂)ₗ₋₁-(CH₂)ₜ-SiX¹₃

Formula (I-2) : CF₃(CF₂)ₗ₋₁-(CH₂)ₜ-SiR¹X¹₂

The fluoroalkylsilane compound represented by the formula (I) may be used alone or in combination of two or more. The fluoroalkylsilane compound represented by the formula (I) can be produced by a general production method and is commercially available.

The above fluoroalkylsilane oligomer has the (SiX^{l}) portions of two or more fluoroalkylsilane compounds represented by the above formula (I) hydrolyzed and condensed with each other. The fluoroalkylsilane oligomer can usually be a mixture containing mainly dimer to 14-mer multimers.

The degree of oligomerization/condensation can be measured by ²⁹Si-NMR, and is indicated by the integral values of T0 species (40-48 ppm in ²⁹Si-NMR) , T1 species (48-54 ppm), T2 species (54-63 ppm), and T3 species (63-75 ppm), respectively. The ²⁹Si-NMR of the fluoroalkylene oligomer mixture indicates 0 to 10%, more preferably 0 to 5%, and still more preferably 0 to 3% of T0 species (40-48 ppm), 0 to 40%, more preferably 1 to 30%, and still more preferably 10 to 25% of T1 species (48-54 ppm), and 20 to 80%, more preferably 25 to 75%, and still more preferably 30 to 70% of T2 species (54-63 ppm). Note that T0, T1, T2, and T3 are described in "Tatsuya Miyazaki and 2 others, "Structural Analysis of Silicon Containing Materials by 29Si NMR," [online], Research report of Asahi Glass Co., Ltd. 66 (2016), p. 32-36, Internet <URL: https://www.agc.com/innovation/library/pdf/66-07.pdf>."

The oligomer is formed by hydrolysis of the compound indicated by the formula (I). The oligomer can be formed by hydrolysis of the same or different compounds represented by the formula (I). The hydrolysis reaction of the compound indicated by the formula (I) with water can be carried out either in the presence or absence of a catalyst. Suitable catalysts include, but are not limited to, an acid catalyst, an alkali catalyst, an organic amine catalyst, and a metal catalyst. In one specific example, the catalyst is selected from hydrochloric acid, nitric acid, acetic acid, sulfuric acid, phosphoric acid, sulfonic acid, methanesulfonic acid, p-toluenesulfonic acid, sodium hydroxide, potassium hydroxide, ammonia, triethylamine, titanium isopropoxide, and dibutyltin dilaurate. It should be understood that water can be provided as part of an aqueous catalyst composition.

The degree of oligomerization (based on ²⁹Si-NMR analysis) and/or the size of the oligomers (based on the number average molecular weight) can be adjusted by adjusting the amount of water in the reaction system, by selecting a suitable catalyst, and/or by selecting suitable reaction conditions. In particular, the molar ratio of water to silicon is controlled when providing the oligomer according to the present disclosure. In one specific example, the molar ratio of water to silicon (water:silicon) can be about 2.5 or less:1, about 2 or less:1, about 1.5 or less:1, about 1.25 or less:1, about 1 or less:1, about 0.75 or less:1, or about 0.5 or less:1. In one specific example, the molar ratio of water to silicon (water:silicon) can be 0.5:1 to 2.5:1, 0.75:1 to 2:1, 1:1 to 1.5:1, or 1:1 to 1.25:1. Note that in addition to the ranges above, it can be another range in which the upper limits and lower limits described above are combined.

The fluoroalkylsilane oligomer can be structurally and compositionally analyzed by ¹H-NMR, ²⁹Si-NMR, GC (gas chromatography), and LC (liquid chromatography) analysis, and the compositional features and ratio of the mixture containing dimer to 14-mer multimers, the ratio and residual ratio of hydrolyzable groups, the degree of condensation, and the like can be measured.

The number average molecular weight of the fluoroalkylsilane oligomer mixture can be preferably 300 or more, preferably 400 or more, more preferably 500 or more, and still more preferably 800 or more.

The number average molecular weight of the fluoroalkylsilane oligomer mixture can be preferably 4,500 or less, more preferably 4,000 or less, still more preferably 3,500 or less, and even more preferably 3,000 or less.

Note that in the present invention, the "number average molecular weight" is measured by GPC (gel permeation chromatography) analysis.

In the fluoroalkylsilane oligomer mixture, the content ratio of methoxy groups (OCH₃) to silicon (Si) (OCH₃/Si, molar ratio) can be preferably 1.5 or more, more preferably 2.0 or more, and still more preferably 2.2 or more. By setting such a ratio to 1.5 or more, the friction durability is further improved. Furthermore, the content ratio of methoxy groups to silicon can be preferably 2.8 or less, more preferably 2.7 or less, and still more preferably 2.5 or less. By setting such a ratio to 2.8 or less, the friction durability is further improved.

The content ratio of methoxy groups to silicon can be measured using ²⁹Si-NMR.

The fluoroalkylsilane oligomer mixture can be preferably 20% by mass or less and more preferably 10% by mass or less based on the total amount of the fluoroalkylsilane oligomer mixture and the perfluoroalkyl group-containing silane compound.

The fluoroalkylsilane oligomer mixture can be preferably 0.1% by mass or more and more preferably 0.5% by mass or more based on the total amount of the fluoroalkylsilane oligomer mixture and the perfluoroalkyl group-containing silane compound.

### [Perfluoroalkyl Group-Containing Silane Compound]

The perfluoroalkyl group-containing silane compound can be a compound represented by the following formula (II):

[A]_{b1}Q² [B]_{b2} (II)

wherein
Q² is a linking group having a valence of (b1+b2);
A is a group represented by R^{f3}-O-R^{f2}-;
R^{f2} is a poly(oxyfluoroalkylene) chain;
R^{f3} is a perfluoroalkyl group;
B is a monovalent group having one -R¹²-(SiR²ᵣX²₃₋ᵣ) and no fluorine atoms;
R¹² is a hydrocarbon group having 2 to 10 carbon atoms and optionally having an ethereal oxygen atom between carbon atoms or at the end opposite the end to which Si is bonded, or optionally having -NH- between carbon atoms;
R² is each independently a hydrogen atom or an optionally substituted monovalent hydrocarbon group having 1 to 6 carbon atoms;
X² is each independently a hydroxyl group or a hydrolyzable group;
r is an integer of 0 to 2;
Q² and B do not contain a cyclic siloxane structure;
b1 is an integer of 1 to 3; and
b2 is an integer of 2 to 9;
provided that, when b1 is two or more, b1 number of A may be the same or different, and b2 number of B may be the same or different.

In the formula (II), A is a group represented by R^{f3}-OR^{f2}-.

R^{f3} is a perfluoroalkyl group, with the number of carbon atoms being preferably 1 to 20, and more preferably 1 to 6. R^{f3} may be linear or branched. In particular, from the viewpoint of availability, the linear group: CF₃(CF₂)ₘ₃₋₁ (where m3 is 1 to 20, preferably 1 to 6) is preferable, CF₃- or CF₃(CF₂)₂- is more preferable, and CF₃(CF₂)₂- is particularly preferable.

R^{f2} is a poly(oxyfluoroalkylene) chain. R^{f2} is, for example, -(CₓF₂ₓO)_{y}- (x is an integer of 1 to 6, y is an integer of 2 or more, and each -CₓF₂ₓO- unit may be the same or different). The -CₓF₂ₓO- unit may be linear or branched, and examples thereof include -CF₂CF₂CF₂CF₂CF₂CF₂O-, - CF₂CF₂CF₂CF₂CF₂O-, -CF₂CF₂CF₂CF₂O-, -CF₂CF₂CF₂O-, -CF(CF₃)CF₂O-, -CF₂CF₂O-, and -CF₂O-. y can be adjusted as appropriate according to the desired number average molecular weight. The preferable upper limit of y is 200.

Alternatively, R^{f2} may be a combination of a plurality of units, in which case each unit may be present in a block, alternating, or random manner. For example, from the viewpoint of having excellent light resistance, - CF₂CF₂CF₂CF₂CF₂F₂O-, -CF₂CF₂CF₂CF₂CF₂O-, and -CF₂CF₂CF₂CF₂O- are preferably contained and the larger the ratio at which these structures are present, the more preferable, and from the viewpoint of ease of synthesis, -CF₂CF₂O-CF₂CF₂CF₂CF₂O-, which is a unit combining -CF₂CF₂CF₂CF₂O- and -CF₂CF₂O-, is more preferable.

Specific examples of R^{f2} include - (CF₂CF₂CF₂CF₂CF₂CF₂O)ₙ₃-(CF₂CF₂CF₂CF₂CF₂O)ₙ₄-(CF₂CF₂CF₂CF₂O)ₙ₅-(CF₂CF₂CF₂O)ₙ₆-(CF(CF₃)CF₂O)ₙ₇-(CF₂CF₂O)ₙ₈-(CF₂O)ₙ₉- (where n3, n4, n5, n6, n7, n8, and n9 are each independently an integer of 0 or more, while the sum of n3, n4, n5, n6, n7, n8, and n9 is 2 or more, and each repeating unit may be present in a block, alternating, or random manner).

R^{f2} is preferably {(CF₂O)ₙ₁₁(CF₂CF₂O)ₙ₁₂}, (CF₂CF₂O)n₁₃, (CF₂CF₂CF₂O)ₙ₁₄, or (CF₂CF₂O-CF₂CF₂CF₂CF₂O)ₙ₁₅, and more preferably {(CF₂O)ₙ₁₁(CF₂CF₂O)ₙ₁₂} or (CF₂CF₂CF₂O)ₙ₁₄. Provided that n11 is an integer of 1 or more, n12 is an integer of 1 or more, n11 + n12 is an integer of 2 to 200, and the bonding order of the n11 number of CF₂Os and the n12 number of CF₂CF₂OS is not limited. n13 and n14 are an integer of 2 to 200, and nl5 is an integer of 1 to 100.

In the formula (II), the number (b1) of groups A represented by R^{f3}-O-R^{f2}- is an integer of 1 to 3. In the formula (II), when there is a plurality of groups A, the groups A may be the same or different. The group A and the perfluoroalkyl group in the fluoroalkylsilane compound are the groups which contribute to the water-repellency of the obtained surface-treating layer. When the perfluoroalkyl group-containing silane compound has a plurality of groups A, the density of R^{f3}-O-R^{f2}- groups increases, which is preferable from the viewpoint of the surface-treating layer having excellent frictional resistance.

In the formula (II), the group B has one -R¹²-(SiR²ᵣX²₃₋ᵣ) (hereinafter also referred to as "group (B^{a})") at the end and is a monovalent group which does not contain any cyclic siloxane structure or fluorine atom.

The group B is specifically a group represented by -Y^{a}-R¹²-(SiR²ᵣX²₃₋ᵣ). The group (B^{a}) and Q² are linked via -Y^{a}-. Y^{a} is a single bond, or a divalent organic group which does not contain any cyclic siloxane structure or fluorine atom. Y^{a} is, for example, an alkylene group (such as an alkylene or arylene group having 8 to 16 carbon atoms) containing an arylene group such as a phenylene group having 6 to 8 carbon atoms at the end, or a divalent group consisting of an alkylene group (for example, having 1 to 20 carbon atoms) bonded to a silalkylene structure (for example, having 1 to 10 carbon atoms and 2 to 10 Si atoms) or a silarylene structure (for example, having 1 to 10 carbon atoms and 2 to 10 Si atoms), and the end on the group (B^{a}) side is other than an alkylene group. The atom in Q² to which Y^{a} is bonded is an atom constituting the main chain, and specific examples include Si, C, and N. Y^{a} is preferably a single bond.

R¹² is a hydrocarbon group having 2 to 10 carbon atoms and optionally having an ethereal oxygen atom between carbon atoms or at the end opposite to where Si is bonded, or optionally having -NH- between carbon atoms. Specifically, a group selected from the group consisting of -CH₂CH₂-, - CH₂CH₂CH₂-, -CH₂OCH₂CH₂CH₂-, -OCH₂CH₂CH₂- (provided that the right side is bonded to Si) is preferable, and from the viewpoint of the water-repellent film having excellent light resistance, -CH₂CH₂- and -CH₂CH₂CH₂-, which contain no ethereal oxygen atom, are particularly preferable. The R¹²s of the plurality of groups B present in the formula (II) may or may not be all the same groups.

X² is a hydroxyl group or a hydrolyzable group. As the hydrolyzable group, the examples and preferable embodiments of the hydrolyzable group in X¹ are applied. r is an integer of 0 to 2, and from the viewpoint of having excellent adhesion and durability, preferably 0 or 1, and more preferably 0. When a plurality of X²s is present, the X²_{S} may be the same or different, but they are preferably the same from the viewpoint of availability.

R² is a hydrogen atom or a monovalent hydrocarbon group having 1 to 6 carbon atoms, with the hydrocarbon group optionally substituted. Examples of the hydrocarbon group include a linear or branched alkyl group. Of these, a linear or branched alkyl group having 1 to 4 carbon atoms is preferable, and a methyl group or ethyl group is more preferable, from the viewpoint of availability. Examples of the substituent include a halogen atom (for example, a chlorine atom). r, which is the number of R²s bonded to Si, is an integer of 0 to 2. When a plurality of R²s is present, the R²s may be the same or different, but they are preferably the same from the viewpoint of availability.

In the formula (II), the number of groups B indicated by b2 is an integer of 2 to 9. Therefore, the number of groups (B^{a}) in the perfluoroalkyl group-containing silane compound is 2 to 9. The group (B^{a}) is a group which contributes to the light and abrasion resistance of the obtained water-repellent film. The number of groups B in the perfluoroalkyl group-containing silane compound, i.e., the number of groups (B^{a}) is preferably 2 to 4 from the viewpoint of the obtained water-repellent film having excellent light and abrasion resistance.

Note that the plurality of groups B that the perfluoroalkyl group-containing silane compound has may be the same or different. The groups (B^{a}) may also be the same or different.

In the formula (II), Q² is a linking group having a valence of (b1+b2). Q² is, for example, a hydrocarbon group, which may have an ester bond, an ether bond, an amide bond, a urethane bond, a phenylene group, -S-, a divalent amino group, a silalkylene structure, a silarylene structure, or a siloxane structure (not including cyclic siloxane structures) at the end or between carbon atoms, and in which the hydrogen atoms of the hydrocarbon group are optionally substituted with fluorine atoms. The hydrogen atoms of the hydrocarbon group are optionally substituted with hydroxyl groups, but the number of substituted hydroxyl groups is preferably 1 to 5. The hydrocarbon group may be linear or branched. The number of carbon atoms in Q² is preferably 1 to 20, more preferably 1 to 10.

Note that in Q², the groups A and B may be bonded to the same atom, but they are preferably bonded to different atoms, and it is more preferable that the bonding atoms be as far apart as possible in the molecule.

Q² may have -SiR⁰ᵣ₁X⁴₃₋ᵣ₁ (R⁰, X⁴, and r1 are the same as R², X², and r of the group (B^{a}), respectively) directly bonded to an atom other than the end of the molecular chain, but as a perfluoroalkyl group-containing silane compound, it preferably has no other hydrolyzable silyl groups other than the group (B^{a}). Note that when the perfluoroalkyl group-containing silane compound has -SiR⁰ᵣ₁X⁴₃₋ᵣ₁ directly bonded to an atom other than the end of the molecular chain, the - SiR⁰ᵣ₁X⁴₃₋ᵣ₁ shall not be included in SiR²ᵣX²₃₋ᵣ when calculating the molar ratio of SiR¹ₚX¹₃₋ₚ of the compound (1) and SiR²ᵣX²₃₋ᵣ of the perfluoroalkyl group-containing silane compound.

In one embodiment, the perfluoroalkyl group-containing silane compound can be a compound represented by any of the following formulae (A1), (A2), (B1), (B2), (C1), and (C2):

(Rf-PFPE)_{β'}-X⁵-(SiR²¹ₙ₁R²²₃₋ₙ₁)_{β} ... (A1)

(R²²₃₋ₙ₁R²¹ₙ₁Si)_{β}-X⁵-PFPE-X⁵-(SiR²¹ₙ₁R²²₃₋ₙ₁)_{β} ... (A2)

(Rf-PFPE)_{γ'}-X⁷-(SiR^{a}ₖₗR^{b}ₗ₁R^{c}ₘ₁)_{γ} ... (B1)

(R^{c}ₘ₁R^{b}ₗ₁R^{a}ₖ₁Si)_{γ}-X⁷-PFPE-X⁷-(SiR^{a}ₖ₁R^{b}ₗ₁R^{c}ₘ₁)_{γ} ··· (B2)

(Rf-PFPE)_{δ'}-X⁹-(CR^{d}ₖ₂R^{e}ₗ₂R^{f}ₘ₂)_{δ} ... (C1)

(R^{f}ₘ₂R^{e}ₗ₂R^{d}ₖ₂C)_{δ}-X⁹-PFPE-X⁹-(CR^{d}ₖ₂R^{e}ₗ₂R^{f}ₘ₂)_{δ} ... (C2)

wherein
PFPE is each independently at each occurrence a group represented by formula:

   -(OC₄F₈)ₐ-(OC₃F₆)_{b}-(OC₂F₄)_{c}-(OCF₂)_{d}-

   wherein a, b, c, and d are each independently an integer of 0 to 200, the sum of a, b, c, and d is at least 1, and the occurrence order of the respective repeating units enclosed in parentheses provided with subscripts a, b, c, and d is not limited in the formula;
Rf is each independently at each occurrence an alkyl group having 1 to 16 carbon atoms, optionally substituted with one or more fluorine atoms;
R²¹ is each independently at each occurrence a hydroxyl group or a hydrolyzable group;
R²² is each independently at each occurrence a hydrogen atom or an alkyl group having 1 to 22 carbon atoms;
n1 is an integer of 0 to 3 independently in each (-SiR²¹ₙ₁R²²₃₋ₙ₁) unit;
provided that at least one n1 in formulae (A1) and (A2) is an integer of 1 to 3;
X⁵ each independently represents a single bond or a di- to decavalent organic group;
β is each independently an integer of 1 to 9;
β' is each independently an integer of 1 to 9;
X⁷ each independently represents a single bond or a di- to decavalent organic group;
γ is each independently an integer of 1 to 9;
γ' is each independently an integer of 1 to 9;
R^{a} is each independently at each occurrence -Z¹-SiR⁷¹ₚ₁R⁷²_{q1}R⁷³ᵣ₁;
Z¹ is each independently at each occurrence an oxygen atom or a divalent organic group;
R⁷¹ is each independently at each occurrence R^{a'};
R^{a'} has the same meaning as R^{a};
in R^{a}, the number of Si atoms linearly linked via a group Z^{l} is at most 5;
R⁷² is each independently at each occurrence a hydroxyl group or a hydrolyzable group;
R⁷³ each independently in each occurrence represents a hydrogen atom or a lower alkyl group;
p1 is each independently at each occurrence an integer of 0 to 3;
q1 is each independently at each occurrence an integer of 0 to 3;
r1 is each independently at each occurrence an integer of 0 to 3;
provided that at least one q1 in formulae (B1) and (B2) is an integer of 1 to 3;
R^{b} is each independently at each occurrence a hydroxyl group or a hydrolyzable group;
R^{c} is each independently at each occurrence a hydrogen atom or a lower alkyl group;
k1 is each independently at each occurrence an integer of 1 to 3;
11 is each independently at each occurrence an integer of 0 to 2;
m1 is each independently at each occurrence an integer of 0 to 2;
provided that, in the unit enclosed in parentheses provided with γ, the sum of k1, l1 and m1 is 3;
X⁹ each independently represents a single bond or a dito decavalent organic group;
δ is each independently an integer of 1 to 9;
δ' is each independently an integer of 1 to 9;
R^{d} is each independently at each occurrence -Z²-**CR⁸¹ₚ₂R⁸²_{q2}R⁸³ᵣ₂** ;
Z² is each independently at each occurrence an oxygen atom or a divalent organic group;
R⁸¹ is each independently at each occurrence R^{d'} ;
R^{d'} has the same meaning as R^{d};
in R^{d}, the number of C atoms linearly linked via a group Z² is at most 5;
R⁸² is each independently at each occurrence -Y-SiR⁸⁵ₙ₂R⁸⁶₃₋ₙ₂ ;
Y is each independently at each occurrence a divalent organic group;
R⁸⁵ is each independently at each occurrence a hydroxyl group or a hydrolyzable group;
R⁸⁶ is each independently at each occurrence a hydrogen atom or a lower alkyl group;
n2 represents an integer of 0 to 3 independently in each (-Y-SiR⁸⁵ₙ₂R⁸⁶₃₋ₙ₂) unit;
provided that at least one n2 in formulae (C1) and (C2) is an integer of 1 to 3;
R⁸³ is each independently at each occurrence a hydrogen atom, a hydroxyl group, or a lower alkyl group;
p2 is each independently at each occurrence an integer of 0 to 3;
q2 is each independently at each occurrence an integer of 0 to 3;
r2 is each independently at each occurrence an integer of 0 to 3;
R^{e} is each independently at each occurrence -Y-**S**iR³⁵ₙ₂R⁸⁶₃₋ₙ₂ ;
R^{f} is each independently at each occurrence a hydrogen atom, a hydroxyl group, or a lower alkyl group;
k2 is each independently at each occurrence an integer of 0 to 3;
12 is each independently at each occurrence an integer of 0 to 3; and
m2 is each independently at each occurrence an integer of 0 to 3;
provided that, in the formulae (C1) and (C2), at least one q2 is 2 or 3 or at least one 12 is 2 or 3.

Formulae (A1) and (A2):

(Rf-PFPE)_{β'}-X⁵-(SiR²¹ₙ₁R²²₃₋ₙ₁)_{β}··· (A1)

(R²²₃₋ₙ₁R²¹ₙ₁Si)_{β}-X⁵-PFPE-X⁵-(SiR²¹ₙ₁R²²₃₋ₙ₁)_{β} ··· (A2)

In the above formulae (A1) and (A2), PFPE is each independently at each occurrence a group represented by:

- (OC₆F₁₂)ₐ- (OC₅F₁₀)_{b}- (OC₄F₈)_{c}- (OC₃F₆)_{d}- (OC₂F₄)ₑ-(OCF₂)_{f}-

In the formulae, a, b, c, d, e, and f are each independently an integer of 0 or more and 200 or less, and the sum of a, b, c, d, e, and f is at least 1. The sum of a, b, c, d, e, and f is preferably 5 or more, and more preferably 10 or more. The sum of a, b, c, d, e, and f is preferably 200 or less, more preferably 200 or less, such as 10 or more and 200 or less, and more specifically 10 or more and 100 or less. The occurrence order of the respective repeating units in parentheses provided with a, b, c, d, e or f is not limited in the formulae.

The above a and b are each independently preferably 0 or more and 30 or less, and may be 0.

In one embodiment, the above a, b, c, and d are each independently preferably an integer of 0 or more and 30 or less, more preferably an integer of 20 or less, particularly preferably an integer of 10 or less, still more preferably an integer of 5 or less, and may be 0.

In one embodiment, the sum of a, b, c and d is preferably 30 or less, more preferably 20 or less, still more preferably 10 or less, and particularly preferably 5 or less.

In one embodiment, the sum of e and f is preferably 30 or more, more preferably 40 or more, and still more preferably 50 or more.

These repeating units may be linear or branched, and are preferably linear. For example, -(OC₆F₁₂)- may be - (OCF₂CF₂CF₂CF₂CF₂CF₂) - , - (OCF (CF₃) CF₂CF₂CF₂CF₂) - , - (OCF₂CF(CF₃)CF₂CF₂CF₂) - , -(OCF₂CF₂CF(CF₃)CF₂CF₂) -, - (OCF₂CF₂CF₂CF(CF₃)CF₂)-, (OCF₂CF₂CF₂CF₂CF(CF₃)) -, or the like, and is preferably - (OCF₂CF₂CF₂CF₂CF₂CF₂) - . - (OC₅F₁₀) - may be - (OCF₂CF₂CF₂CF₂CF₂) -, - (OCF (CF₃) CF₂CF₂CF₂) -, - (OCF₂CF(CF₃) CF₂CF₂) -, - (OCF₂CF₂CF(CF₃) CF₂) - , - (OCF2CF2CF2CF (CF₃) ) -, or the like, and is preferably - (OCF₂CF₂CF₂CF₂CF₂) - . - (OC₄F₈) - may be any of - (OCF₂CF₂CF₂CF₂) -, - (OCF(CF₃)CF₂CF₂)-, - (OCF₂CF(CF₃)CF₂)-, -(OCF₂CF₂CF(CF₃))-, - (OC(CF₃) ₂CF₂) -, - (OCF₂C(CF₃)₂) -, - (OCF (CF₃) CF(CF₃)) -, - (OCF(C₂F₅)CF₂) -, and - (OCF₂CF(C₂F₅)) -, and is preferably - (OCF₂CF₂CF₂CF₂) -. - (OC₃F₆) - may be any of - (OCF2CF2CF2) -, - (OCF(CF₃)CF₂)- and -(OCF₂CF(CF₃))-, and is preferably - (OCF₂CF₂CF₂) - . Also, - (OC₂F₄)- may be any of - (OCF₂CF₂) - and - (OCF(CF₃)) -, and is preferably - (OCF₂CF₂) - .

In one embodiment, the above-described PFPE is - (OC₃F₆)_{d}-, wherein d is an integer of 1 or more and 200 or less, preferably 5 or more and 200 or less, and more preferably 10 or more and 200 or less. Preferably, PFPE is -(OCF₂CF₂CF₂)_{d}-, wherein d is an integer of 1 or more and 200 or less, preferably 5 or more and 200 or less, and more preferably 10 or more and 200 or less, or -(OCF(CF₃)CF₂)_{d}-, wherein d is an integer of 1 or more and 200 or less, preferably 5 or more and 200 or less, and more preferably 10 or more and 200 or less. More preferably, PFPE is - (OCF₂CF₂CF₂)_{d}-, wherein d is an integer of 1 or more and 200 or less, preferably 5 or more and 200 or less, and more preferably 10 or more and 200 or less.

In another embodiment, PFPE is - (OC₄F₈)_{c}-(OC₃F₆)_{d}-(OC₂F₄)ₑ- (OCF₂)_{f}-, wherein c and d are each independently an integer of 0 or more and 30 or less, e and f are each independently an integer of 1 or more and 200 or less, preferably 5 or more and 200 or less, more preferably 10 or more and 200 or less, the sum of c, d, e and f is at least 5 or more, preferably 10 or more, and the occurrence order of the respective repeating units in parentheses provided with the subscript c, d, e or f is not limited in the formulae. Preferably, PFPE is - (OCF₂CF₂CF₂CF₂)_{c}-(OCF₂CF₂CF₂)_{d}-(OCF₂CF₂)ₑ-(OCF₂)_{f}- .

In one embodiment, PFPE may be -(OC₂F₄)ₑ-(OCF₂)_{f}-, wherein e and f are each independently an integer of 1 or more and 200 or less, preferably 5 or more and 200 or less, and more preferably 10 or more and 200 or less, and the occurrence order of respective repeating unit, which is shown in parenthesis subscripted with e or f, is not limited in the formula.

In still another embodiment, PFPE is a group represented by - (R⁶-R⁷)ⱼ - . In the formula, R⁶ is each independently at each occurrence OCF₂ or OC₂F₄, and preferably OC₂F₄. In the formula, R⁷ is each independently at each occurrence a group selected from OC₂F₄, OC₃F₆, OC₄F₈, OC₅F₁₀, and OCₑF₁₂, or a combination of two or three groups independently selected from these groups. Preferably, R⁷ is a group selected from OC2F4, OC₃F₆, and OC₄F₈, a group selected from OC₃F₆, OC₄F₈, OC₅F₁₀, and OC₆F₁₂, or a combination of two or three groups independently selected from these groups. Examples of the combination of 2 or 3 groups independently selected from OC₂F₄, OC₃F₆, and OC₄F₈ include, but are not limited to, - OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, - OC₂F₄OC₂F₄O₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄- , - OC₃F₆OC₂F₄OC₃F₆-, -OC₃F₆OC₃F₆OC₂F₄-, and -OC₄F₈OC₂F₄OC₂F₄- . j is an integer of 2 or more, preferably 3 or more and more preferably 5 or more, and 100 or less and preferably 50 or less. In the formula, OC₂F₄, OC₃F₆, OC₄F₈, OC₅F₁₀, and OC₆F₁₂ may be either linear or branched, and are preferably linear. In this embodiment, PFPE is preferably -(OC₂F₄-OC₃F₆)ⱼ- or - (OC₂F₄-OC₄F₈)ⱼ-.

The ratio of e to f in PFPE (hereinafter, referred to as "e/f ratio") is 0.1 or more and 10 or less, preferably 0.2 or more and 5 or less, more preferably 0.2 or more and 2 or less, and still more preferably 0.2 or more and 1.5 or less. By setting the e/f ratio within the above range, the water-repellency, oil-repellency, and chemical resistance (e.g., resistance to salt water, an acidic or basic aqueous solution, acetone, oleic acid, or hexane) of the surface-treating layer obtained from the surface-treating agent of the present disclosure can be further improved. The smaller the e/f ratio, the better the water-repellency, oil-repellency, and chemical resistance of the above surface-treating layer is. On the other hand, with an e/f ratio of 0.1 or more, the stability of the compound can be further enhanced. The larger the e/f ratio is, the higher the stability of the compound is.

In the formulae, Rf represents an alkyl group having 1 to 16 carbon atoms optionally substituted with one or more fluorine atoms.

In the above-described alkyl group having 1 to 16 carbon atoms optionally substituted with one or more fluorine atoms, the "alkyl group having 1 to 16 carbon atoms" may be linear or branched, and it is preferably a linear or branched alkyl group having 1 to 6 carbon atoms, particularly 1 to 3 carbon atoms, and more preferably a linear alkyl group having 1 to 3 carbon atoms.

Rf is preferably an alkyl group that has 1 to 16 carbon atoms and that is substituted with one or more fluorine atoms, more preferably a CF₂H-C₁₋₁₅ fluoroalkylene group, and even more preferably a perfluoroalkyl group having 1 to 16 carbon atoms.

The perfluoroalkyl group having 1 to 16 carbon atoms may be linear or branched, and is preferably a linear or branched perfluoroalkyl group having 1 to 6 carbon atoms, particularly 1 to 3 carbon atoms, and more preferably a linear perfluoroalkyl group having 1 to 3 carbon atoms; specifically, -CF₃, -CF₂CF₃ or -CF₂CF₂CF₃.

In the above formulae, R²¹ is each independently at each occurrence a hydroxyl group or a hydrolyzable group.

In the above formulae, R²² is each independently at each occurrence a hydrogen atom or an alkyl group having 1 to 22 carbon atoms, and preferably an alkyl group having 1 to 4 carbon atoms.

In the above formulae, n1 is an integer of 0 to 3 independently in each (-SiR²¹ₙ₁R²²₃₋ₙ₁) unit, preferably 1 to 3, more preferably 3. However, all the integers represented by n1 are not simultaneously 0 in the formulae. In other words, there is at least one R²¹ in the formulae.

In the above formulae, X⁵ each independently represents a single bond or a di- to decavalent organic group. X⁵ in compounds represented by formulae (A1) and (A2) is interpreted as a linker connecting a perfluoropolyether moiety (Rf-PFPE moiety or -PFPE- moiety) which mainly provides, e.g., water-repellency and surface lubricity, and a silane moiety (i.e., -SiR²¹ₙ₁R²²₃₋ₙ₁) which provides binding ability to a substrate. Thus, X⁵ may be any organic group as long as the compounds represented by formulae (A1) and (A2) can be stably present.

In the above formulae, β is an integer of 1 to 9, and β' is an integer of 1 to 9. The integers represented by β and β' are determined in accordance with the valence of X³. In formula (A1), the sum of β and β' is equal to the valence of X⁵. For example, when X⁵ represents a decavalent organic group, the sum of β and β' is 10; for example, a case where β is 9 and β' is 1, β is 5 and β' is 5, or β is 1 and β' is 9, can be considered. When X⁵ is a divalent organic group, β and β' each are 1. In formula (A2), β is a value obtained by subtracting 1 from the valence of X⁵.

X⁵ is preferably a di- to heptavalent, more preferably di- to tetravalent, and further preferably a divalent organic group.

In one embodiment, X⁵ is a di- to tetravalent organic group, β is 1 to 3, and β' is 1.

In another embodiment, X⁵ is a divalent organic group, β1 is 1, and β1' is 1. In this case, formulae (A1) and (A2) are represented by the following formulae (A1') and (A2'), respectively.

Rf-PFPE-X⁵- SiR²¹ₙ₁R²²₃₋ₙ₁ ··· (A1')

R²²₃₋ₙ₁R²¹ₙ₁Si - X⁵ - PFPE - X⁵ - SiR²¹ₙ₁R²²₃₋ₙ₁ ··· (A2')

Examples of the above-described X⁵ are not limited, but examples thereof include a single bond and a divalent group represented by the following formula:

- (R³¹)_{p'} - (X^{a})_{q'} -

wherein
R³¹ is each independently at each occurrence a single bond, - (CH₂)_{s'}- or an o-, m- or p-phenylene group, and is preferably - (CH₂)_{s'}-;
s' represents an integer of 1 to 20, preferably 1 to 6, more preferably 1 to 3 and still further preferably 1 or 2;
X^{a} is each independently at each occurrence (X^{b})_{1'};
X^{b} is each independently at each occurrence a group selected from the group consisting of -O-, -S-, an o-, m- or p-phenylene group, -C(O)O-, -Si(R³³)₂-, - (Si (R³³)₂O)_{m'}-Si(R³³)₂-, -CONR³⁴-, -O-CONR³⁴-, -NR³⁴- and -(CH₂)_{n'}-;
R³³ is each independently at each occurrence a phenyl group, a C₁₋₆ alkyl group or a C₁₋₆ alkoxy group, and is preferably a phenyl group or a C₁₋₆ alkyl group, and more preferably a methyl group;
R³⁴ is each independently at each occurrence a hydrogen atom, a phenyl group or a C₁₋₆ alkyl group (preferably a methyl group);
m' is each independently at each occurrence an integer of 1 to 100 and preferably an integer of 1 to 20;
n' is each independently at each occurrence an integer of 1 to 20, preferably an integer of 1 to 6, and more preferably an integer of 1 to 3;
l' is an integer of 1 to 10, preferably an integer of 1 to 5, and more preferably an integer of 1 to 3;
p' is 0, 1, or 2; and
q' is 0 or 1;
provided that at least one of p' and q' is 1, and the occurrence order of the respective repeating units in parentheses provided with p' or q' is not limited.

Here, R³¹ and X^{a} (typically, hydrogen atoms of R³¹ and X^{a}) are each optionally substituted with one or more substituents selected from a fluorine atom, a C₁₋₃ alkyl group and a C₁₋₃ fluoroalkyl group.

In one embodiment, l' is 1.

Preferably, X⁵ represents - (R³¹)_{p'} - (X^{a})_{q'}-R³²- _{.} R³² represents a single bond, - (CH₂)_{t'}- , or an o-, m-, or p-phenylene group, and is preferably - (CH₂)_{t'}-. t' is an integer of 1 to 20, preferably an integer of 2 to 6, and more preferably an integer of 2 to 3. Here, R³² (typically a hydrogen atom of R³²) is optionally substituted with one or more substituents selected from a fluorine atom, a C₁₋₃ alkyl group and a C₁₋₃ fluoroalkyl group.

Preferably, X⁵ can be
a single bond, or a group represented by -Rf'-X¹²-
wherein X¹² is
a C₁₋₂₀ alkylene group,
a -R³¹-X^{c}-R³²- or
-X^{d}-R³²- group,
wherein R³¹ and R³² have the same meaning as described above;
   Rf' is a single bond or - (C_{1'}F_{21'} -; and
   l' is an integer of 1 to 4.

Herein, such an alkylene group is a group having a -(CₙH₂ₙ)-structure, and is optionally substituted or unsubstituted and is optionally linear or branched.

Still more preferably, X⁵ is
-X^{f}-,
an -X^{f}C₁₋₂₀ alkylene group,
-X^{f}-(CH₂)_{s'}-X^{c}-,
-X^{f}-(CH₂)_{s'}-X^{c}-(CH₂)_{t'}-,
-X^{f}-X^{d}-, or
-X^{f}-X^{d}-(CH₂)_{t'}-.

In the formulae, s' and t' have the same meaning as described above.

In the above formulae, X^{f} is an alkylene group having 1 to 6 carbon atoms, preferably 1 to 4 carbon atoms, and more preferably 1 to 2 carbon atoms, such as a methylene group. A hydrogen atom of X^{f} may be substituted with one or more substituents selected from a fluorine atom, a C₁₋₃ alkyl group, and a C₁₋₃ fluoroalkyl group, and is preferably substituted. X^{f} may be linear or branched, and is preferably linear.

More preferably, X⁵ can be
a single bond, or a group represented by -Rf'-X¹³-
wherein X¹³ is
a C₁₋₂₀ alkylene group,
a - (CH₂)_{s'}-X^{c}-,
- (CH₂) _{s'}-X^{c}-(CH₂)_{t'} -
-X^{d}- or
-X^{d}-(CH₂)_{t'} - group,
wherein s' and t' have the same meaning as described above;
   Rf' is a single bond or - (C_{1'}F_{21'}) -; and
   l' is an integer of 1 to 4.

In the above formulae, X^{c} represents
-O-,
-S-,
-C(O)O-,
-CONR³⁴- ,
-O-CONR³⁴-,
-Si(R³³)₂-,
- (Si (R³³)₂O)_{m'}-Si(R³³)₂-,
-O-(CH₂)_{u'}-(Si(R³³)₂O)ₘ,-Si(R³³)₂-,
-O-(CH₂)_{u'}-Si(R³³)₂-O-Si(R³³)₂-CH₂CH₂-Si(R³³)₂-O-Si(R³³)₂- ,
-O-(CH₂)_{u'}-Si(OCH₃)₂OSi(OCH₃)₂-,
-CONR³⁴-(CH₂)_{u'}-(Si(R³³)₂O)_{m'}-Si(R³³)₂- ,
-CONR³⁴-(CH₂)_{u'}-N(R³⁴)-, or
-CONR³⁴-(o-, m- or p-phenylene) -Si (R³³)₂-,
wherein R³³, R³⁴ and m' have the same meaning as described above, and
   u' is an integer of 1 to 20, preferably an integer of 2 to 6, and more preferably an integer of 2 to 3. X^{c} is preferably -O-.

In the above formulae, X^{d} represents
-S-,
-C(O)O-,
-CONR³⁴- ,
-CONR³⁴-(CH₂)_{u'}-(Si(R³³)₂O)_{m'}-Si(R³³)₂-,
-CONR³⁴-(CH₂)_{u'}-N(R³⁴) -, or
-CONR³⁴-(o-, m- or p-phenylene) -Si (R³³)₂-,
wherein each symbol has the same meaning as described above.

Particularly preferably, X⁵ is
-X^{f}- ,
an -X^{f}-C₁₋₂₀ alkylene group,
-X^{f}-(CH₂)_{s'} -x^{c}- ,
-X^{f}- (CH₂) s'-X^{c}- (CH₂) _{t'} - ,
-X^{f}-X^{d}-, or
-X^{f}-X^{d}-(CH₂)_{t'}-
wherein X^{f}, s' and t' have the same meaning as described above;
   X^{c} represents -0- or -CONR³⁴-;
   X^{d} represents -CONR³⁴-; and
   R³⁴ is each independently at each occurrence a hydrogen atom, a phenyl group or a C₁₋₆ alkyl group (preferably a methyl group).

In one embodiment, X⁵ is
-X^{f}-(CH₂)_{s'}-X^{c}- ,
-X^{f}-(CH₂)_{s'}-X^{c}-(CH₂)ₜ'-,
-X^{f}-X^{d}-, or
-X^{f}-X^{d}-(CH₂)_{t'}-,
wherein X^{f}, s' and t' have the same meaning as described above;
   X^{c} represents -CONR³⁴-;
   X^{d} represents -CONR³⁴-; and
   R³⁴ is each independently at each occurrence a hydrogen atom, a phenyl group or a C₁₋₆ alkyl group (preferably a methyl group).

In one embodiment, X⁵ can be
a single bond,
a C₁₋₂₀ alkylene group,
- (CH₂)_{s'}-X^{c}-(CH₂)_{t'}- or
-X^{d}-(CH₂)_{t'}-,
wherein each symbol has the same meaning as described above.

Preferably, X⁵ is
a single bond, or a group represented by -Rf'-X¹⁴-
wherein X¹⁴ is
a C₁₋₂₀ alkylene group,
a -(CH₂)_{s'}-O-(CH₂)_{t'} -,
- (CH₂)_{s'}-(Si(R³³)₂O)_{m'} -Si(R³³)₂-(CH₂)_{t'}- ,
-(CH₂)_{s'}-O-(CH₂)_{u'}-(Si(R³³)₂O)_{m'}-Si(R³³)₂-(CH₂)_{t'}-, or
-(CH₂)_{s'}-O-(CH₂)_{t'}-Si(R³³)₂-(CH₂)_{u'}-Si(R³³)₂-(CᵥH₂ᵥ)- group,
wherein R³³, m', s', t' and u' have the same meaning as described above; v represents an integer of 1 to 20, preferably an integer of 2 to 6 and more preferably an integer of 2 or 3;
   Rf' is a single bond or -(C_{1'}F_{21'})-; and
   l' is an integer of 1 to 4.

In the formula, -(CᵥH₂ᵥ)- may be linear or branched and can be, for example, -CH2CH2-, -CH₂CH₂CH₂-, -CH(CH₃)-, or - CH(CH₃)CH₂- .

The X⁵ group is optionally substituted with one or more substituents selected from a fluorine atom, a C₁₋₃ alkyl group and a C₁₋₃ fluoroalkyl group (preferably, C₁₋₃ perfluoroalkyl group).

In another embodiment, examples of the X⁵ group include the following groups: 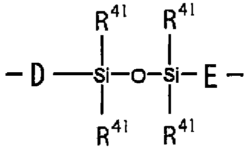 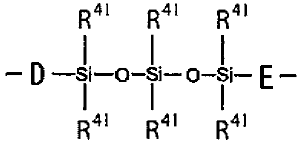 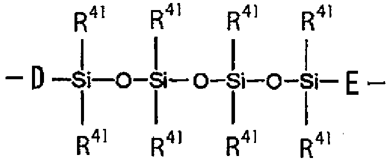 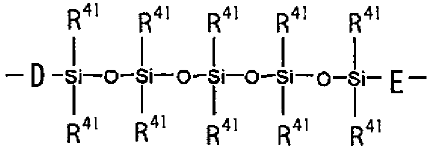 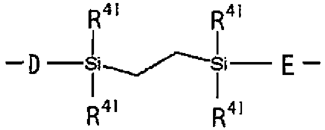 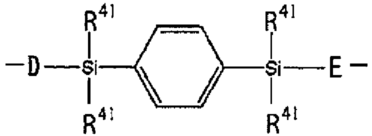 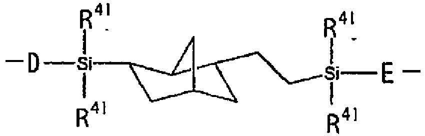 wherein R⁴¹ is each independently a hydrogen atom, a phenyl group, an alkyl group having 1 to 6 carbon atoms or a C₁₋₆ alkoxy group, and preferably a methyl group,
D is a group represented by
-Rf'-X¹⁵-
wherein X¹⁵ is
-CH₂O(CH₂)₂-,
-CH₂O(CH₂)₃-,
-CF₂O(CH₂)₃-,
- (CH₂)₂-,
- (CH₂)₃-,
- (CH₂)₄- ,
-CONH- (CH₂) -,
-CONH- (CH₂) ₂-,
-CONH- (CH₂) ₃-,
-CON(CH₃)-(CH₂)₃-,
-CON(Ph)-(CH₂)₃- (wherein Ph means phenyl), and 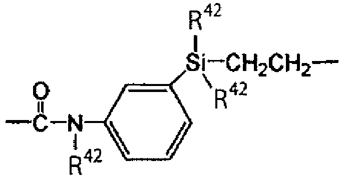
(wherein R⁴² each independently represents a hydrogen atom, a C₁₋₆ alkyl group or a C₁₋₆ alkoxy group, preferably a methyl group or a methoxy group, and more preferably a methyl group);
Rf' is a single bond or - (C_{1'}F_{21'}) -; and
l' is an integer of 1 to 4;
E is -(CH₂)ₙ- (n represents an integer of 2 to 6), and
D is bonded to PFPE of the molecular backbone, and E is bonded to the group opposite to PFPE.

Specific examples of X⁵ include:
a single bond, and a group represented by -Rf'-X¹⁰-
wherein X¹⁰ is a group selected from the group consisting of:
   -CH₂OCH₂- ,
   -CH₂O(CH₂) ₂-,
   -CH₂O(CH₂)₃-,
   -CH₂O(CH₂)₆-,
   -CF₂-CH₂-O-CH₂-,
   -CF₂-CH₂-O-(CH₂) ₂-,
   -CF₂-CH₂-O-(CH₂)₃-,
   -CF₂-CH₂-O-(CH₂)₆-,
   -CH₂O(CH₂)₃Si(CH₃)₂OSi(CH₃)₂(CH₂)₂- ,
   -CH₂O(CH₂)₃Si(CH₃)₂OSi(CH₃)₂OSi(CH₃)₂(CH₂)₂-,
   -CH₂O(CH₂)₃Si(CH₃)₂O(Si (CH₃)₂O)₂Si(CH₃)₂(CH₂)₂-,
   -CH₂O(CH₂)₃Si(CH₃)₂O(Si(CH₃)₂O)₃Si(CH₃)₂(CH₂)₂-,
   -CH₂O(CH₂) ₃Si(CH₃)₂O(Si (CH₃)₂O)₁₀Si(CH₃)₂(CH₂) ₂-,
   -CH₂O(CH₂) ₃Si(CH₃)₂O(Si (CH₃)₂O)₂OSi(CH₃)₂(CH₂) ₂-,
   -CH₂OCF₂CHFOCF₂- ,
   -CH₂OCF₂CHFOCF₂CF₂- ,
   -CH₂OCF₂CHFOCF₂CF₂CF₂- ,
   -CH₂OCH₂CF₂CF₂OCF₂-,
   -CH₂OCH₂CF₂CF₂OCF₂CF₂-,
   -CH₂OCH₂CF₂CF₂OCF₂CF₂CF₂- ,
   -CH₂OCH₂CF₂CF₂OCF(CF₃) CF₂OCF₂-,
   -CH₂OCH₂CF₂CF₂OCF(CF₃) CF₂OCF₂CF₂- ,
   -CH₂OCH₂CF₂CF₂OCF(CF₃) CF₂OCF₂CF₂CF₂- ,
   -CH₂OCH₂CHFCF₂OCF₂- ,
   -CH₂OCH₂CHFCF₂OCF₂CF₂- ,
   -CH₂OCH₂CHFCF₂OCF₂CF₂CF₂- ,
   -CH₂OCH₂CHFCF₂OCF(CF₃) CF₂OCF₂- ,
   -CH₂OCH₂CHFCF₂OCF(CF₃) CF₂OCF₂CF₂- ,
   -CH₂OCH₂CHFCF₂OCF(CF₃) CF₂OCF₂CF₂CF₂- ,
   -CH₂OCF₂CHFOCF₂CF₂CF₂-C(O)NH-CH₂-,
   CH₂OCH₂(CH₂) ₇CH₂Si(OCH₃)₂OSi(OCH₃)₂(CH₂) ₂Si(OCH₃)₂OSi(OCH₃)₂(CH₂ )₂-,
   -CH₂OCH₂CH₂CH₂Si(OCH₃)₂OSi(OCH₃)₂(CH₂)₃- ,
   -CH₂OCH₂CH₂CH₂Si(OCH₂CH₃)₂OSi(OCH₂CH₃)₂(CH₂) ₃- ,
   -CH₂OCH₂CH₂CH₂Si(OCH₃)₂OSi(OCH₃)₂(CH₂)₂-,
   -CH₂OCH₂CH₂CH₂Si(OCH₂CH₃)₂OSi(OCH₂CH₃)₂(CH₂)₂-,
   - (CH₂)₂-Si(CH₃)₂-(CH₂)₂-,
   -CH₂-,
   - (CH₂)₂- ,
   - (CH₂)₃- ,
   - (CH₂)₄- ,
   - (CH₂)₅- ,
   - (CH₂)₆-,
   -CF₂-,
   -(CF₂)₂-,
   -CF₂-CH₂- ,
   -CF₂-(CH₂)₂-,
   -CF₂-(CH₂)₃-,
   -CF₂-(CH₂)₄-,
   -CF₂-(CH₂)₅-,
   -CF₂-(CH₂) ₆-,
   -CO-,
   -CONH-,
   -CONH-CH₂-,
   -CONH-(CH₂)₂-,
   -CONH-(CH₂)₃-,
   -CONH-(CH₂)₆- ,
   -CF₂CONH-,
   -CF₂CONHCH₂-,
   -CF₂CONH(CH₂)₂-,
   -CF₂CONH(CH₂)₃-,
   -CF₂CONH(CH₂)₆-,
   -CON(CH₃)-(CH₂)₃- ,
   -CON(Ph)-(CH₂)₃- (wherein Ph means phenyl),
   -CON(CH₃)-(CH₂)₆-,
   -CON(Ph)-(CH₂)₆- (wherein Ph means phenyl),
   -CF₂-CON(CH₃)-(CH₂)₃-,
   -CF₂-CON(Ph)-(CH₂)₃-(wherein Ph means phenyl),
   -CF₂-CON(CH₃)-(CH₂)₆- ,
   -CF₂-CON(Ph)-(CH₂)₆- (wherein Ph means phenyl),
   -CONH-(CH₂)₂NH(CH₂)₃-,
   -CONH-(CH₂)₆NH(CH₂) ₃- ,
   -CH₂O-CONH-(CH₂)₃-,
   -CH₂O-CONH-(CH₂)₆-,
   -S-(CH₂)₃-,
   -(CH₂)₂S(CH₂)₃-,
   -CONH-(CH₂)₃Si(CH₃)₂OSi(CH₃)₂(CH₂) ₂- ,
   -CONH-(CH₂)₃Si(CH₃)₂OSi(CH₃)₂OSi(CH₃)₂(CH₂)₂-,
   -CONH-(CH₂)₃Si(CH₃)₂O(Si(CH₃)₂O)₂Si(CH₃)₂(CH₂) ₂-,
   -CONH-(CH₂)₃Si(CH₃)₂O(Si(CH₃)₂O)₃Si(CH₃)₂(CH₂)₂-,
   -CONH-(CH₂)₃Si(CH₃)₂O(Si(CH₃)₂O)₁₀Si(CH₃)₂(CH₂)₂-,
   -CONH-(CH₂)₃Si(CH₃)₂O(Si(CH₃)₂O)₂OSi(CH₃)₂(CH₂)₂-,
   -C(O)O-(CH₂)₃-,
   -C(O)O-(CH₂)₆-,
   -CH₂-O-(CH₂)₃-Si(CH₃)₂-(CH₂)₂-Si(CH₃)₂-(CH₂)₂-,
   -CH₂-O-(CH₂)₃-Si(CH₃)₂-(CH₂)₂-Si(CH₃)₂-CH(CH₃)-,
   -CH₂-O-(CH₂)₃-Si(CH₃)₂-(CH₂)₂-Si(CH₃)₂-(CH₂)₃-,
   -CH₂-O-(CH₂)₃-Si(CH₃)₂-(CH₂)₂-Si(CH₃)₂-CH(CH₃)-CH₂- ,
   -OCH₂- ,
   -O(CH₂)₃- ,
   -OCFHCF₂- ,

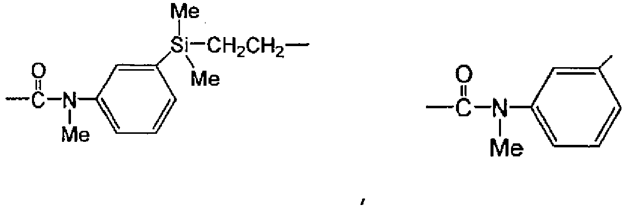

Rf' is a single bond or - (C_{1'}F_{21'}) -; and
l' is an integer of 1 to 4.

In a more preferable embodiment, X⁵ represents x^{e}'. X^{e}' is a single bond, an alkylene group having 1 to 6 carbon atoms, -R⁵¹-C₆H₄-R⁵²-, -R⁵¹-CONR⁴-R⁵²-, -R⁵¹-CONR⁴-C₆H₄-R⁵²-, - R⁵¹-CO-R⁵²-, -R⁵¹-CO-C₆H₄-R⁵²-, -R⁵¹-SO₂NR⁴-R⁵²-, -R⁵¹-SO₂NR⁴-C₆H₄-R⁵²-, -R⁵¹-SO₂-R⁵²-, or -R⁵¹-SO₂-C₆H₄-R⁵²-. R⁵¹ and R⁵² each independently represent a single bond or an alkylene group having 1 to 6 carbon atoms, preferably a single bond or alkylene group having 1 to 3 carbon atoms. R⁴ has the same meaning as described above. The alkylene group is substituted or unsubstituted, preferably unsubstituted. Examples of the substituent of the alkylene group can include a halogen atom, preferably a fluorine atom. The alkylene group is linear or branched, preferably linear.

In a further preferable embodiment, X^{e'} can be a single bond,
-X^{f}-,
an alkylene group having 1 to 6 carbon atoms, preferably having 1 to 3 carbon atoms,
an -X^{f}-C₁₋₆ alkylene group, preferably an -X^{f}-C₁₋₃ alkylene group, and more preferably
an -X^{f}-C₁₋₂ alkylene group,
-C₆H₄-R^{52'}-,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-CO-R^{52'}-,
-CO-C₆H₄-R^{52'}-,
-SO₂NR^{4'}-R^{52'}-,
-SO₂NR^{4'}-C₆H₄-R^{52'}-,
-SO₂-R^{52'}-,
-SO₂-C₆H₄-R^{52'}-,
-R^{51'}-C₆H₄-,
-R^{51'}-CONR^{4'}-,
-R^{51'}-CONR^{4'}-C₆H₄-,
-R^{51'}-CO-,
-R^{51'}-CO-C₆H₄-,
-R^{51'}-SO₂NR^{4'}- ,
-R^{51'}-SO₂NR^{4'}-C₆H₄-,
-R^{51'}-SO₂-,
-R^{51'}-SO₂-C₆H₄-,
-C₆H₄-,
-CONR^{4'}- ,
-CONR^{4'}-C₆H₄-,
-X^{f}-CONR^{4'}-,
-X^{f}-CONR^{4'}-C₆H₄-,
-CO-,
-CO-C₆H₄-,
-SO₂NR^{4'}-,
-SO₂NR^{4'}-C₆H₄-,
-SO₂-, or
-SO₂-C₆H₄-,
wherein R^{51'} and R^{52'} are each independently a linear alkylene group having 1 to 6 carbon atoms, preferably 1 to 3 carbon atoms, where as described above, the above alkylene group is substituted or unsubstituted, and examples of the substituent of the above alkylene group includes a halogen atom, and preferably a fluorine atom; and
   R^{4'} is a hydrogen atom or methyl group.

In the above, X^{e¹} can preferably be
-X^{f}-,
an alkylene group having 1 to 6 carbon atoms, preferably having 1 to 3 carbon atoms,
an -X^{f}-C₁₋₆ alkylene group, preferably an -X^{f}-C₁₋₃ alkylene group, and more preferably
an -X^{f}-C₁₋₂ alkylene group,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X^{f}-CONR^{4'}-,
-X^{f}-CONR^{4'}-C₆H₄-,
-R^{51'}-CONR^{4'}-, or
-R^{51'}-CONR^{4'}-C₆H₄-.

In the formulae, X^{f}, R^{4'}, R^{51'}, and R^{52'} have the same meaning as described above.

In the above, 2X^{e'} can more preferably be
- CONR^{4'}-R^{52'}-,
- CONR⁴¹-C₆H₄-R^{52'}-,
- X^{f}-CONR^{4'}-R^{52'}-,
- X^{f}-CONR^{4'}-C₆H₄-R^{52'}-,
- R^{51'}- CONR^{4'}-,
- R^{53'}-CONR^{4'}-C₆H₄-,
- CONR^{4'}-,
- CONR^{4'}-C₆H₄-,
- X^{f}-CONR^{4'}-, or
- X^{f}-CONR^{4'}-C₆H₄-.

In the present embodiment, specific examples of X^{e'} include
a single bond,
a perfluoroalkylene group having 1 to 6 carbon atoms (such as -CF₂- and -(CF₂)₂-),
an alkylene group having 1 to 6 carbon atoms, a -CF₂-C₁₋₆ alkylene group,
-CONH-,
-CONH-CH₂-,
-CONH- (CH₂)₂-,
-CONH-(CH₂)₃- ,
-CF₂-CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)- (CH₂)₂-,
-CON(CH₃)-(CH₂)₃-,
-CF₂-CON(CH₃)-,
-CF₂-CON(CH₃)CH₂-,
-CF₂-CON(CH₃)- (CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)- (CH₂)₃-,
-CON(CH₃)-C₆H₄-,
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-,
-CF₂-CON(CH₃)-C₆H₄-,
-CO-,
-CO-C₆H₄-,
-C₆H₄-,
-SO₂NH-,
-SO₂NH-CH₂-,
-SO₂NH-(CH₂)₂-,
-SO₂NH-(CH₂)₃-,
-SO₂NH-C₆H₄-,
-SO₂N(CH₃)-,
-SO₂N(CH₃)-CH₂-,
-SO₂N(CH₃)-(CH₂)₂-,
-SO₂N(CH₃)-(CH₂)₃-,
-SO₂N(CH₃)-C₆H₄-,
-SO₂-,
-SO₂-CH₂-,
-SO₂-(CH₂)₂-,
-SO₂-(CH₂)₃-, and
-SO₂-C₆H₄-.

Among those listed above, preferable examples of X^{e'} include:
an alkylene group having 1 to 6 carbon atoms,
a perfluoroalkylene group having 1 to 6 carbon atoms (such as -CF₂- and -(CF₂)₂-),
a -CF₂-C₁₋₆ alkylene group,
   - CONH-,
   - CONH-CH₂-,
   - CONH-(CH₂)₂-,
   - CONH-(CH₂)₃-,
   - CF₂CONH-,
   - CF₂CONHCH₂-,
   - CF₂CONH(CH₂)₂-,
   - CF₂CONH(CH₂)₃-,
   - CON(CH₃)-,
   - CON(CH₃)-CH₂-,
   - CON(CH₃)-(CH₂)₂-,
   - CON(CH₃)-(CH₂)₃-,
   - CF₂-CON(CH₃)-,
   - CF₂-CON(CH₃)-CH₂-,
   - CF₂-CON(CH₃)-(CH₂)₂-,
   - CF₂-CON(CH₃)-(CH₂)₃-,
   - CH₂-CONH-,
   - CH₂-CONH-CH₂-,
   - CH₂-CONH-(CH₂)₂-,
   - CH₂-CONH-(CH₂)₃-,
   - CF₂-CH₂-CONH-,
   - CF₂-CH₂-CONH-CH₂-,
   - CF₂-CH₂-CONH-(CH₂)₂-,
   - CF₂-CH₂-CONH-(CH₂)₃-,
   - CONH-C₆H₄-,
   - CON(CH₃)-C₆H₄-,
   - CH₂-CON(CH₃)-CH₂-,
   - CH₂-CON(CH₃)-(CH₂)₂-,
   - CH₂-CON(CH₃)- (CH₂)₃-,
   - CON(CH₃)-C₆H₄-,
   - CF₂-CONH-C₆H₄-,
   - CF₂-CON(CH₃)-C₆H₄-,
   - CF₂-CH₂-CON(CH₃)-CH₂-,
   - CF₂-CH₂-CON(CH₃)-(CH₂)₂-,
   - CF₂-CH₂-CON(CH₃)-(CH₂)₃-, and
   - CF₂-CON(CH₃)-C₆H₄-.

Among those listed above, more preferable examples of X^{e'} include:
- CONH-,
- CONH-CH₂-,
- CONH-(CH₂)₂- ,
- CONH-(CH₂)₃-,
- CF₂CONH-,
- CF₂CONHCH₂-,
- CF₂CONH(CH₂)₂-,
- CF₂CONH(CH₂)₃-,
- CON(CH₃)-,
- CON(CH₃)-CH₂-,
- CON(CH₃)- (CH₂)₂- ,
- CON(CH₃)- (CH₂)₃- ,
- CF₂-CON(CH₃)-,
- CF₂-CON(CH₃)-CH₂-,
- CF₂-CON(CH₃)-(CH₂)₂-,
- CF₂-CON(CH₃)-(CH₂)₃-,
- CH₂-CONH-,
- CH₂-CONH-CH₂- ,
- CH₂-CONH-(CH₂)₂-,
- CH₂-CONH-(CH₂)₃-,
- CF₂-CH₂-CONH-,
- CF₂-CH₂-CONH-CH₂-,
- CF₂-CH₂-CONH-(CH₂)₂-,
- CF₂-CH₂-CONH-(CH₂)₃-,
- CONH-C₆H₄-,
- CON(CH₃)-C₆H₄-,
- CH₂-CON(CH₃)-CH₂-,
- CH₂-CON(CH₃)- (CH₂)₂-,
- CH₂-CON(CH₃)-(CH₂)₃-,
- CON(CH₃)-C₆H₄-,
- CF₂-CONH-C₆H₄-,
- CF₂-CON(CH₃)-C₆H₄-,
- CF₂-CH₂-CON(CH₃)-CH₂-,
- CF₂-CH₂-CON(CH₃)- (CH₂)₂-,
- CF₂-CH₂-CON(CH₃)-(CH₂)₃-, and
- CF₂-CON(CH₃)-C₆H₄-.

Such any compound represented by formulae (A1) and (A2) can be produced by a known method, for example, a method described in Patent Literature 1, or an improved method thereof.

Formulae (B1) and (B2) :

(Rf-PFPE)_{γ'}-X⁷-(SiR^{a}ₖ₁R^{b}ₗ₁R^{c}ₘ₁)_{γ} ··· (B1)

(R^{c}ₘ₁R^{b}ₗ₁R^{a}ₖ₁Si)_{γ}-X⁷- PFPE - X⁷- (SiR^{a}ₖ₁R^{b}ₗ₁R^{c}ₘ₁)_{γ} ··· (B2)

In formulae (B1) and (B2), Rf and PFPE have the same meanings as described with respect to formulae (A1) and (A2) .

In the above formulae, X⁷ each independently represents a single bond or a di- to decavalent organic group. X⁷ in compounds represented by formulae (B1) and (B2) is interpreted as a linker connecting a perfluoropolyether moiety (Rf-PFPE moiety or -PFPE- moiety) which mainly provides, e.g., water-repellency and surface lubricity, and a silane moiety (i.e., -SiR^{a}ₖ₁R^{b}ₗ₁R^{c}ₘ₁ group) which provides binding ability to a substrate. Thus, X⁷ may be any organic group as long as compounds represented by formulae (B1) and (B2) can be stably present.

In the formulae, γ is an integer of 1 to 9 and γ' is an integer of 1 to 9. The integers represented by γ and γ' are determined in accordance with the valence of X⁷. In formula (B1), the sum of γ and γ' is equal to the valence of X⁷. For example, when X⁷ represents a decavalent organic group, the sum of γ and γ' is 10; for example, a case where γ is 9 and γ' is 1; γ is 5 and γ' is 5 or γ is 1 and γ' is 9, can be considered. When X⁷ is a divalent organic group, γ and γ' each are 1. In formula (B2), γ is a value obtained by subtracting 1 from the value of the valence of X⁷.

X⁷ is preferably a di- to heptavalent, more preferably di- to tetravalent, and further preferably a divalent organic group.

In one embodiment, X⁷ is a di- to tetravalent organic group, γ is 1 to 3, and γ' is 1.

In another embodiment, X⁷ is a divalent organic group, γ is 1, and γ' is 1. In this case, formulae (B1) and (B2) are represented by the following formulae (B1') and (B2'), respectively.

Rf-PFPE-X⁷-SiR^{a}ₖ₁R^{b}ₗ₁R^{c}ₘ₁ ··· (B1')

R^{c}ₘ₁R^{b}ₗ₁R^{a}ₖ₁Si-X⁷-PFPE-X⁷-SiR^{a}ₖ₁R^{b}ₗ₁R^{c}ₘ₁ ··· (B2')

Examples of X⁷ are not limited, and include the same as described with respect to X⁵.

In the above formulae, R^{a} is each independently at each occurrence -Z¹-SiR⁷¹ₚ₁R⁷²_{q1}R⁷³ᵣ₁.

In the formulae, Z¹ is each independently at each occurrence an oxygen atom or a divalent organic group.

Z¹ is preferably a divalent organic group, and does not encompass any group which is taken together with a Si atom at an end of a molecular backbone in formula (B1) or formula (B2) (Si atom to which R^{a} is bonded) to form a siloxane bond.

Z¹ is preferably a C₁₋₆ alkylene group, - (CH₂)_{g}-O- (CH₂)ₕ-, wherein g is an integer of 1 to 6, and h is an integer of 1 to 6, or -phenylene-(CH₂)ᵢ-, wherein i is an integer of 0 to 6, and more preferably a C₁₋₃ alkylene group. These groups may be substituted with one or more substituents selected from, for example, a fluorine atom, a C₁₋₆ alkyl group, a C₂₋₆ alkenyl group, and a C₂₋₆ alkynyl group.

In the formulae, R⁷¹ is each independently at each occurrence R^{a'}. R^{a'} has the same meaning as R^{a}.

In R^{a}, the number of Si atoms linearly linked via a group Z¹ is at most 5. That is to say, in R^{a}, when at least one R⁷¹ is present, the number of Si atoms linearly linked via a group Z¹ in R^{a} is two or more, and the number of Si atoms linearly linked via a group Z¹ is at most 5. "The number of Si atoms linearly linked via a group Z¹ in R^{a}" is equal to the number of repeats of -Z¹-Si- linearly linked in R^{a}.

More specifically, an example of the case where Si atoms are connected via a group Z¹ (hereinafter simply referred to as "Z") in R^{a} is shown below:

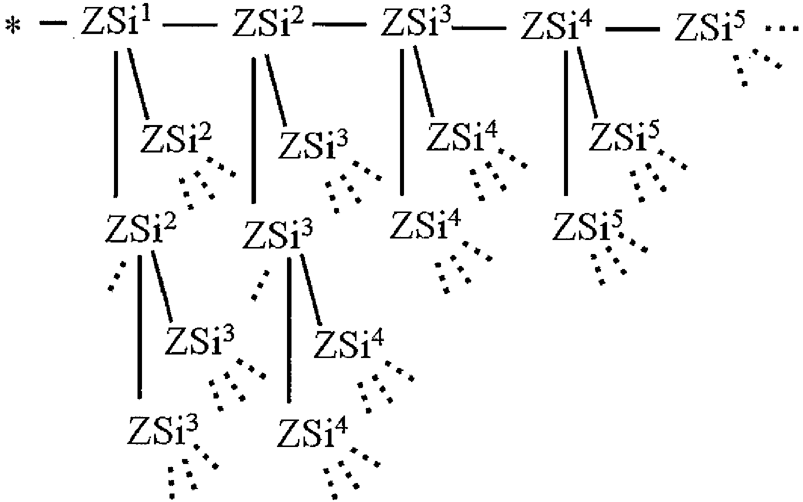

In the above formula, "*" means a site to be bonded to the Si atom of the main chain, and "..." means that a predetermined group except ZSi is bonded, or that is to say, when three bonds of a Si atom are all expressed by "...", the repeat of ZSi ends there. The superscripted number on Si means the number of Si atoms that appear and that are linearly linked via a group Z when counted from "*". That is to say, a chain where the repetition of ZSi terminates at Si² is a chain where the "number of Si atoms linearly linked via the group Z¹ in R^{a}" is 2, and, likewise, chains where the repetition of ZSi is completed at Si³, Si⁴, and Si⁵ mean chains where the "number of Si atoms linearly linked via the group Z¹ in R^{a}" is 3, 4, and 5, respectively. As is apparent from the above formula, a plurality of ZSi chains are present in R^{a}; and it is not necessary that these ZSi chains all have the same length and the lengths of the chains may be arbitrarily set.

In a preferable embodiment, the "number of Si atoms linearly linked via a group Z¹ in R^{a}" is 1 (left formula) or 2 (right formula) in all chains, as represented below.

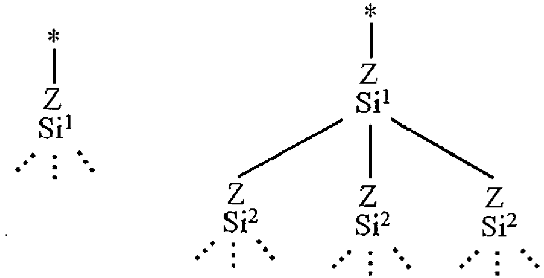

In one embodiment, the number of Si atoms linearly linked via a group Z in R^{a} is 1 or 2 and preferably 1.

In the formula, R⁷² is each independently at each occurrence a hydroxyl group or a hydrolyzable group.

The "hydrolyzable group" as used herein refers to a group which can undergo a hydrolysis reaction. Examples of the hydrolyzable group include -OR, -OCOR, -O-N=C(R)₂, -N(R)₂, -NHR and a halogen (in these formulae, R represents a substituted or unsubstituted alkyl group having 1 to 4 carbon atoms), and preferably is -OR (alkoxy group). Examples of R include an unsubstituted alkyl group such as a methyl group, an ethyl group, a propyl group, an isopropyl group, a n-butyl group and an isobutyl group; and a substituted alkyl group such as a chloromethyl group. Of them, an alkyl group, particularly an unsubstituted alkyl group, is preferable, a methyl group or an ethyl group is more preferable. The hydroxyl group, although it is not limited, may be a group generated by hydrolyzation of a hydrolyzable group.

Preferably, R⁷² is -OR, wherein R represents a substituted or unsubstituted C₁₋₃ alkyl group, and more preferably a methyl group.

In the formula, R⁷³ is each independently at each occurrence a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, p1 is each independently at each occurrence an integer of 0 to 3; q1 is each independently at each occurrence an integer of 0 to 3; and r1 is each independently at each occurrence an integer of 0 to 3; provided that the sum of p1, q1 and r1 is 3.

In a preferable embodiment, q1 in R^{a}' (R^{a} in the case where no R^{a}' is present) at an end of R^{a} is preferably 2 or more, for example, 2 or 3, more preferably 3.

In a preferable embodiment, at least one end of R^{a} can be -Si(-Z¹-SiR⁷²_{q}R⁷³ᵣ)₂ or -Si(-Z¹-SiR⁷²_{q}R⁷³ᵣ)₃, preferably -Si(-Z¹-SiR⁷²_{q}R⁷³ᵣ)₃. In the formula, the (-Z¹-SiR⁷²_{q}R⁷³ᵣ) unit is preferably (-Z¹-SiR⁷²₃). In a further preferable embodiment, all ends of R^{a} can be -Si (-Z¹-SiR⁷²_{q}R⁷³ᵣ)₃ and preferably -Si(-Z¹-SiR⁷²₃)₃.

In the above formulae (B1) and (B2), at least one R⁷² is present.

In the above formulae, R^{b} is each independently at each occurrence a hydroxyl group or a hydrolyzable group.

R^{b} is preferably a hydroxyl group, -OR, -OCOR, -ON=C(R)₂, -N(R)₂, -NHR or a halogen (in these formulae, R represents a substituted or unsubstituted alkyl group having 1 to 4 carbon atoms), and preferably -OR. Examples of R include an unsubstituted alkyl group such as a methyl group, an ethyl group, a propyl group, an isopropyl group, a n-butyl group and an isobutyl group; and a substituted alkyl group such as a chloromethyl group. Of them, an alkyl group, particularly an unsubstituted alkyl group, is preferable, a methyl group or an ethyl group is more preferable. The hydroxyl group, although it is not limited, may be a group generated by hydrolyzation of a hydrolyzable group. More preferably, R^{b} is -OR, wherein R represents a substituted or unsubstituted C₁₋₃ alkyl group, more preferably a methyl group.

In the above formulae, R^{c} is each independently at each occurrence a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formulae, k1 is each independently at each occurrence an integer of 0 to 3; l1 is each independently at each occurrence an integer of 0 to 3; and m1 is each independently at each occurrence an integer of 0 to 3; provided that the sum of k1, 11 and m1 is 3.

In a preferable embodiment, k1 is each independently at each occurrence an integer of 1 to 3; 11 is each independently at each occurrence an integer of 0 to 2; and m1 is each independently at each occurrence an integer of 0 to 2.

Such any compound represented by formulae (B1) and (B2) can be obtained by, for example, introducing a hydroxyl group and then a group having an unsaturated bond into an end of a perfluoropolyether derivative corresponding to an Rf-PFPE-portion, as a raw material, thereafter reacting such a group having an unsaturated bond, and a silyl derivative having a halogen atom, further introducing a hydroxyl group into an end of the silyl group, and reacting the group having an unsaturated bond, introduced, and the silyl derivative.

Formulae (C1) and (C2):

(Rf- PFPE) _{δ'}- X⁹-(CR^{d}ₖ₂R^{e}ₗ₂R^{f}ₘ₂)_{δ} ··· (C1)

(R^{f}ₘ₂R^{e}ₗ₂R^{d}ₖ₂C)_{δ}-X⁹-PFPE-X⁹-(CR^{d}ₖ₂R^{e}ₗ₂R^{f}ₘ₂)_{δ} ··· (C2)

In formulae (C1) and (C2), Rf and PFPE have the same meanings as described with respect to formulae (A1) and (A2) .

In the above formulae, X⁹ each independently represents a single bond or a di- to decavalent organic group. X in compounds represented by formulae (C1) and (C2) is interpreted as a linker connecting a perfluoropolyether moiety (i.e., Rf-PFPE moiety or -PFPE- moiety) which mainly provides, e.g., water-repellency and surface lubricity, and a moiety (i.e., a group enclosed in parentheses provided with δ) providing binding ability to a substrate. Thus, X may be any organic group as long as compounds represented by formulae (C1) and (C2) can be stably present.

In the above formulae, δ is an integer of 1 to 9, and δ' is an integer of 1 to 9. The integers represented by δ and δ' can vary depending on the valence of X. In formula (C1), the sum of δ and δ' is equal to as the valence of X. For example, in the case where X is a decavalent organic group, the sum of δ and δ' is 10, and for example, δ can be 9 and δ' can be 1, δ can be 5 and δ' can be 5, or δ can be 1 and δ' can be 9. When X⁹ is a divalent organic group, δ and δ' each are 1. In formula (C2), δ is a value obtained by subtracting 1 from the valence of X⁹.

X⁹ is preferably a di- to heptavalent, more preferably di- to tetravalent, and further preferably divalent organic group.

In one embodiment, X⁹ is a di- to tetravalent organic group, δ is 1 to 3, and δ' is 1.

In another embodiment, X⁹ is a divalent organic group, δ is 1, and δ'is 1. In this case, formulae (C1) and (C2) are represented by the following formulae (C1') and (C2'), respectively.

Rf - PFPE - X⁹- CR^{d}ₖ₂R^{e}ₗ₂R^{f}ₘ₂ ··· (C1')

R^{f}ₘ₂R^{e}ₗ₂R^{d}ₖ₂C- X⁹- PFPE -X⁹- CR^{d}ₖ₂R^{e}ₗ₂R^{f}ₘ₂ ··· (C2')

Examples of X⁹ are not limited, and include the same as described with respect to X⁵.

In the formulae, R^{d} is each independently at each occurrence -Z²-CR⁸¹ₚ₂R⁸²_{q2}R⁸³ᵣ₂·

In the formulae, Z² is each independently at each occurrence an oxygen atom or a divalent organic group.

Z² is preferably a C₁₋₆ alkylene group, - (CH₂)_{g}-O- (CH₂)ₕ-, wherein g is an integer of 0 to 6, for example, an integer of 1 to 6, and h is an integer of 0 to 6, for example, an integer of 1 to 6, or -phenylene- (CH₂)ᵢ-, wherein i is an integer of 0 to 6, more preferably a C₁₋₃ alkylene group. These groups may be substituted with one or more substituents selected from, for example, a fluorine atom, a C₁₋₆ alkyl group, a C₂₋₆ alkenyl group, and a C₂₋₆ alkynyl group.

In the formulae, R⁸¹ is each independently at each occurrence R^{d'}. R^{d'} has the same meaning as R^{d}.

In R^{d}, the number of C atoms linearly linked via a group Z² is at most 5. That is, in the case where at least one R⁸¹ is present in R^{d}, two or more C atoms linearly linked via a group Z² are present in R^{d}, and the number of such C atoms linearly linked via a group Z² in R^{d} is at most 5. The "number of C atoms linearly linked via a group Z² in R^{d}" is equal to the number of repeats of -Z²-C- linearly linked in R^{d}. This is similar to the description of R^{a} in formulae (B1) and (B2).

In a preferable embodiment, "the number of C atoms linearly linked via a group Z² in R^{d}" is 1 (left formula) or 2 (right formula) in all chains.

In one embodiment, the number of C atoms linearly linked via a group Z² in R^{d} is 1 or 2 and preferably 1.

In the formulae, R⁸² represents -Y-SiR⁸⁵ₙ₂R⁸⁶₃₋₂ₙ.

Y is each independently at each occurrence a divalent organic group.

In a preferable embodiment, Y is a C₁₋₆ alkylene group, -(CH₂)_{g'}-O-(CH₂)_{h'}-, wherein g' is an integer of 0 to 6, for example, an integer of 1 to 6, and h' is an integer of 0 to 6, for example, an integer of 1 to 6, or -phenylene- (CH₂)_{i'}-, wherein i' is an integer of 0 to 6. These groups may be substituted with one or more substituents selected from, for example, a fluorine atom, a C₁₋₆ alkyl group, a C₂₋₆ alkenyl group, and a C₂₋₆ alkynyl group.

In one embodiment, Y can be a C₁₋₆ alkylene group, -O-(CH₂)_{h'}-, or -phenylene-(CH₂)_{i'}-. When Y is the above group, light resistance, particularly ultraviolet resistance, can be more increased.

R⁸⁵ is each independently at each occurrence a hydroxyl group or a hydrolyzable group.

The "hydrolyzable group" as used herein refers to a group which can undergo a hydrolysis reaction. Examples of the hydrolyzable group include -OR, -OCOR, -O-N=C(R)₂, -N(R)₂, -NHR and halogen (in these formulae, R represents a substituted or unsubstituted alkyl group having 1 to 4 carbon atoms), and preferably is -OR (alkoxy group). Examples of R include an unsubstituted alkyl group such as a methyl group, an ethyl group, a propyl group, an isopropyl group, a n-butyl group and an isobutyl group; and a substituted alkyl group such as a chloromethyl group. Of them, an alkyl group, particularly an unsubstituted alkyl group, is preferable, a methyl group or an ethyl group is more preferable. The hydroxyl group, although it is not limited, may be a group generated by hydrolyzation of a hydrolyzable group.

Preferably, R⁸⁵ is -OR, wherein R represents a substituted or unsubstituted C₁₋₃ alkyl group, more preferably an ethyl group or a methyl group, and particularly, a methyl group.

R⁸⁶ is each independently at each occurrence a hydrogen atom or a lower alkyl group. The lower alkyl group is preferably an alkyl group having 1 to 20 carbon atoms, more preferably an alkyl group having 1 to 6 carbon atoms, and further preferably a methyl group.

n2 represents an integer of 0 to 3 independently in each (-Y-SiR⁸⁵ₙ₂R⁸⁶₃₋ₙ₂) unit, preferably an integer of 1 to 3, more preferably 2 or 3, and still more preferably 3.

R⁸³ is each independently at each occurrence a hydrogen atom, a hydroxyl group, or a lower alkyl group. The lower alkyl group is preferably an alkyl group having 1 to 20 carbon atoms, more preferably an alkyl group having 1 to 6 carbon atoms, and further preferably a methyl group. In one embodiment, R⁸³ is each independently at each occurrence a hydrogen atom or a lower alkyl group.

In the formulae, p2 is each independently at each occurrence an integer of 0 to 3; q2 is each independently at each occurrence an integer of 0 to 3; and r2 is each independently at each occurrence an integer of 0 to 3; provided that the sum of p2, q2 and r2 is 3.

In a preferable embodiment, q2 in R^{d'} (R^{d} in the case where no R^{d'} is present) at an end of R^{d} is preferably 2 or more, for example, 2 or 3, more preferably 3.

In a preferable embodiment, at least one end of R^{d} can be -C(-Y-SiR⁸⁵_{q2}R⁸⁶ᵣ₂)₂ or -C (-Y-SiR⁸⁵_{q2}R⁸⁶ᵣ₂)₃, preferably -C(-Y-SiR⁸⁵_{q2}R⁸⁶ᵣ₂)₃. In the formulae, the (-Y-SiR⁸⁵_{q2}R⁸⁶ᵣ₂) unit is preferably (-Y-SiR⁸⁵₃). In a further preferable embodiment, all ends of R^{d} can be -C(-Y-SiR⁸⁵_{q2}R⁸⁶ᵣ₂)₃, preferably -C(-Y-SiR⁸⁵₃)₃.

In the formulae, R^{e} is each independently at each occurrence -Y-SiR⁸⁵ₙ₂R⁸⁶₃₋ₙ₂. Herein, Y, R⁸⁵, R⁸⁶ and n2 have the same meanings as in R⁸² above.

In the formulae, R^{f} is each independently at each occurrence a hydrogen atom, a hydroxyl group, or a lower alkyl group. The lower alkyl group is preferably an alkyl group having 1 to 20 carbon atoms, more preferably an alkyl group having 1 to 6 carbon atoms, and further preferably a methyl group. In one embodiment, R^{f} is each independently at each occurrence a hydrogen atom or a lower alkyl group.

In the formulae, k2 is each independently at each occurrence an integer of 0 to 3; 12 is each independently at each occurrence an integer of 0 to 3; and m2 is each independently at each occurrence an integer of 0 to 3; provided that the sum of k2, l2 and m2 is 3.

In one embodiment, at least one k2 is 2 or 3, preferably 3.

In one embodiment, k2 is 2 or 3, preferably 3.

In one embodiment, 12 is 2 or 3, preferably 3.

In the above formulae (C1) and (C2), at least one q2 is 2 or 3 or at least one 1 is 2 or 3. That is, at least two -Y-SiR⁸⁵ₙ₂R⁸⁶₃₋ₙ₂ groups are present in the formulae.

The perfluoro(poly)ether group-containing silane compound represented by the formula (C1) or (C2) can be produced by combining known methods. For example, a compound represented by formula (C1') where X is divalent can be produced as follows, without any limitation.

In one embodiment, Rf' in each of the above embodiments is a single bond in formulae (A1), (B1), and (C1), and is (C_{1'}F_{2l'}) in the X⁵ located to the left of PFPE, and (C_{1'}F_{21'}) in the X⁵ located to the right of PFPE in formulae (A2), (B2), and (C2).

In one embodiment, Rf' in each of the above embodiments can be a single bond.

The perfluoro(poly)ether group-containing silane compound represented by the formulae (A1), (A2), (B1), (B2), (C1) and (C2) is not limited, and can have a number average molecular weight of 5 × 10² to 1 × 10⁵. The number average molecular weight can preferably be 2,000 to 30,000, more preferably 3,000 to 10,000, and still more preferably 3,000 to 8,000. Such "number average molecular weight" is measured by GPC (gel permeation chromatography) analysis.

In the surface-treating agent of the present disclosure, based on the total of the compounds represented by formulae (A1), (B1), and (C1) (hereinafter, also referred to as "one end-compound") and the compounds represented by formulae (A2), (B2), and (C2) (hereinafter, also referred to as "both ends-compound"), the both ends-compounds are preferably 0.1 mol% or more and 35 mol% or less. The lower limit of the content of the both ends-compounds based on the total of the one end-compounds and both ends-compounds can preferably be 0.1 mol%, more preferably 0.2 mol%, still more preferably 0.5 mol%, even more preferably 1 mol%, particularly preferably 2 mol%, and especially 5 mol%. The upper limit of the content of the both ends-compounds based on the total of the one end-compounds and both ends-compounds can preferably be 35 mol%, more preferably 30 mol%, still more preferably 20 mol%, even more preferably 15 mol% or 10 mol%. The both ends-compounds are preferably 0.1 mol% or more and 30 mol% or less, more preferably 0.1 mol% or more and 20 mol% or less, still more preferably 0.2 mol% or more and 10 mol% or less, even more preferably 0.5 mol% or more and 10 mol% or less, and particularly preferably 1 mol% or more and 10 mol% or less, for example, 2 mol% or more and 10 mol% or less, or 5 mol% or more and 10 mol% or less, based on the total of the one-end compounds and both ends-compounds. With the both ends-compounds being within such a range, friction durability can be more increased.

The surface-treating agent of the present disclosure can contain a (unreactive) fluoropolyether compound which can be understood as solvent or fluorine-containing oil, preferably a perfluoro(poly)ether compound (hereinafter, referred to collectively as "fluorine-containing oil"), a (unreactive) silicone compound which can be understood as a silicone oil (hereinafter, referred to as "silicone oil"), a catalyst, a surfactant, a polymerization inhibitor, a sensitizer and the like.

Examples of the solvent include aliphatic hydrocarbons such as hexane, cyclohexane, heptane, octane, nonane, decane, undecane, dodecane, and mineral spirits; aromatic hydrocarbons such as benzene, toluene, xylene, naphthalene, and solvent naphtha; esters such as methyl acetate, ethyl acetate, propyl acetate, n-butyl acetate, isopropyl acetate, isobutyl acetate, cellosolve acetate, propylene glycol methyl ether acetate, carbitol acetate, diethyl oxalate, ethyl pyruvate, ethyl 2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate, and ethyl 2-hydroxyisobutyrate; ketones such as acetone, methyl ethyl ketone, methyl isobutyl ketone, 2-hexanone, cyclohexanone, methyl amino ketone, and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether, and ethylene glycol monoalkyl ether; alcohols such as methanol, ethanol, isopropanol, n-butanol, isobutanol, tert-butanol, sec-butanol, 3-pentanol, octyl alcohol, 3-methyl-3-methoxybutanol, and tert-amyl alcohol; glycols such as ethylene glycol and propylene glycol; cyclic ethers such as tetrahydrofuran, tetrahydropyran, and dioxane; amides such as N,N-dimethylformamide and N,N-dimethylacetamide; ether alcohols such as methyl cellosolve, cellosolve, isopropyl cellosolve, butyl cellosolve, and diethylene glycol monomethyl ether; diethylene glycol monoethyl ether acetate; and fluorine-containing solvents such as 1,1,2-trichloro-1,2,2-trifluoroethane, 1,2-dichloro-1,1,2,2-tetrafluoroethane, dimethyl sulfoxide, 1,1-dichloro-1,2,2,3,3-pentafluoropropane (HCFC 225), Zeorora H, HFE 7100, HFE 7200, and HFE 7300. Alternatively, the solvent may be a mixed solvent of two or more of such solvents.

Examples of the fluorine-containing oil include, but are not limited to, a compound (perfluoro(poly)ether compound) represented by the following general formula (3):

Rf⁵-(OC₄F₈)_{a'}-(OC₃F₆)_{b'}-(OC₂F₄)_{c'}-(OCF₂)_{d'}-Rf⁶ ... (3)

In the formula, Rf⁵ represents an alkyl group having 1 to 16 carbon atoms optionally substituted with one or more fluorine atoms (preferably, C₁₋₁₆ perfluoroalkyl group), Rf⁶ represents an alkyl group having 1 to 16 carbon atoms optionally substituted with one or more fluorine atoms (preferably, C₁₋₁₆ perfluoroalkyl group), a fluorine atom, or a hydrogen atom, and Rf⁵ and Rf⁶ are each independently, more preferably, a C₁₋₃ perfluoroalkyl group.

a', b', c' and d' represent the respective four numbers of repeating units in perfluoro(poly)ether constituting a main backbone of the polymer and are mutually independently an integer of 0 or more and 300 or less, the sum of a', b', c' and d' is at least 1, preferably 1 to 300, more preferably 20 to 300. The occurrence order of the respective repeating units enclosed in parentheses provided with a subscript a', b', c' or d' is not limited in the formula. Among such repeating units, for example, -(OC₄F₈)- may be any of - (OCF₂CF₂CF₂CF₂)-, (OCF(CF₃)CF₂CF₂)-, (OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)- and -(OCF₂CF(C₂F₅)) - and is preferably -(OCF₂CF₂CF₂CF₂)-, -(OC₃F₆)- may be any of - (OCF₂CF₂CF₂)-, -(OCF(CF₃)CF₂)- and -(OCF₂CF(CF₃))-, and is preferably -(OCF₂CF₂CF₂)- . -(OC₂F₄)- may be any of -(OCF₂CF₂)-and -(OCF(CF₃))- and is preferably -(OCF₂CF₂)-.

Examples of the perfluoro(poly)ether compound represented by the general formula (3) include a compound represented by any of the following general formulae (3a) and (3b) (which may be adopted singly or as a mixture of two or more kinds thereof).

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (3b)

In these formulae, Rf⁵ and Rf⁶ are as described above; in formula (3a), b" is an integer of 1 or more and 100 or less; and, in formula (3b), a" and b" are each independently an integer of 0 or more and 30 or less, c" and d" are each independently an integer of 1 or more and 300 or less. The occurrence order of the respective repeating units enclosed in parentheses accompanied by a subscript a", b", c" or d" is not limited in the formula.

From another viewpoint, the fluorine-containing oil may be a compound represented by general formula Rf³-F wherein Rf³ is a C₅₋₁₆ perfluoroalkyl group. The fluorine-containing oil may be a chlorotrifluoroethylene oligomer.

The fluorine-containing oil may have an average molecular weight of 500 to 10,000. The molecular weight of the fluorine-containing oil may be measured using GPC.

The fluorine-containing oil may be contained in an amount of, for example, 0 to 50 mass%, preferably 0 to 30 mass%, more preferably 0 to 5 mass% based on the composition of the present disclosure. In one embodiment, the composition of the present disclosure is substantially free of the fluorine-containing oil. Being substantially free of the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluoropolyether group-containing compound. With such average molecular weights, better friction durability and surface lubricity can be obtained particularly when a surface-treating layer is formed by a vacuum deposition method.

In one embodiment, the average molecular weight of the fluorine-containing oil may be smaller than the average molecular weight of the fluoropolyether group-containing compound. With such average molecular weights, it is possible to form a cured product having high friction durability and high surface lubricity while suppressing deterioration of the transparency of a surface-treating layer obtained from the compound.

The fluorine-containing oil contributes to increasing the surface lubricity of a layer formed of the composition of the present disclosure.

For example, the silicone oil may be linear or cyclic silicone oil having 2,000 or less siloxane bonds. The linear silicone oil may be so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the composition of the present disclosure (for example, a surface-treating agent), such a silicone oil may be contained in an amount of, for example, 0 to 300 parts by mass, and preferably 50 to 200 parts by mass, based on the total 100 parts by mass of the fluoropolyether group-containing silane compound of the present disclosure (in the case of two or more kinds, the total thereof, and the same applies below).

Silicone oil contributes to increasing the surface lubricity of the surface-treating layer.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydrative condensation of the fluoropolyether group-containing silane compound of the present disclosure, and promotes formation of a layer formed of the composition of the present disclosure (for example, a surface-treating agent).

Examples of other components include, in addition to those described above, tetraethoxysilane, methyltrimethoxysilane, 3-aminopropyltrimethoxysilane, 3-glycidoxypropyltrimethoxysilane, and methyltriacetoxysilane.

The composition of the present disclosure can be used as a surface-treating agent for surface treatment of a substrate.

The surface-treating agent of the present disclosure can be formed into pellets by impregnating a porous material such as a porous ceramic material or a metal fiber such as a fiber obtained by, for example, solidifying steel wool in a cotton-like form with the composition. Such pellets can be used in, for example, vacuum deposition.

Hereinafter, an article of the present disclosure will be described.

The article of the present disclosure comprises a substrate and a layer (surface-treating layer) on a surface of the substrate, the layer being formed of a surface-treating agent comprising a fluoroalkylsilane oligomer mixture and a perfluoroalkyl group-containing silane compound according to the present disclosure.

The substrate that can be used in the present disclosure may be composed of any suitable material such as glass, a resin (which may be a natural or synthetic resin, for example, a common plastic material, and may be in the form of a plate, a film, or the like), a metal, ceramics, a semiconductor (such as silicon and germanium), a fiber (such as woven fabric and nonwoven fabric), fur, leather, a wood material, a ceramic material, a stone material, or a building material.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (e.g., as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited. The surface region of the substrate on which a surface-treating layer is to be formed may be at least a part of the substrate surface, and may be suitably determined according to the application, specific specifications, and the like of an article to be produced.

The substrate, or at least the surface portion thereof, may be composed of a material originally having a hydroxyl group. Examples of the material include glass as well as metal (in particular, base metal) wherein a natural oxidized film or a thermal oxidized film is formed on the surface, ceramics, and semiconductors. Alternatively, when the substrate has an insufficient amount of a hydroxyl group or when the substrate originally does not have a hydroxyl group as in resin and the like, a pre-treatment may be performed on the substrate to thereby introduce or increase a hydroxyl group on the surface of the substrate. Examples of such a pre-treatment include a plasma treatment (e.g., corona discharge) and ion beam irradiation. The plasma treatment can be suitably utilized to not only introduce or increase a hydroxyl group on the substrate surface, but also clean the substrate surface (remove foreign matter and the like). Another example of the pre-treatment includes a method wherein a monolayer of a surface adsorbent having a carbon-carbon unsaturated bonding group is formed on the substrate surface by a LB method (a Langmuir-Blodgett method), a chemical adsorption method, or the like beforehand, and thereafter cleaving the unsaturated bond under an atmosphere containing oxygen, nitrogen, or the like.

Alternatively, the substrate may be that of which at least the surface consists of a material comprising other reactive group such as a silicone compound having one or more Si-H group or alkoxysilane.

Then, on the surface of such a substrate, a layer of the surface-treating agent of the present disclosure is formed, this layer is post-treated as necessary, and thereby a layer is formed from the surface-treating agent of the present disclosure.

The layer of the surface-treating agent of the present disclosure can be formed by applying the above composition on the surface of the substrate such that the composition coats the surface. The coating method is not limited. For example, a wet coating method and a dry coating method can be used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave or the like, ion beam, and similar methods. Specific examples of the CVD method include plasma-CVD, optical CVD, thermal CVD, and similar methods.

Furthermore, coating by an atmospheric pressure plasma method can be performed.

When using the wet coating method, the surface-treating agent of the present disclosure can be applied to the substrate surface after being diluted with a solvent. From the viewpoint of the stability of the composition of the present disclosure and the volatility of solvents, the following solvents are preferably used: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin (registered trademark) AC-6000 manufactured by Asahi Glass Co., Ltd.)), and 1,1,2,2,3,3,4-heptafluorocyclopentane (such as Zeorora (registered trademark) H manufactured by Zeon Corporation); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec (trademark) 7000 manufactured by Sumitomo 3M Limited), perfluorobutyl methyl ether (C₄F₉OCH₃) (such as Novec (trademark) 7100 manufactured by Sumitomo 3M Limited), perfluorobutyl ethyl ether (C₄F₉OC₂H₅) (such as Novec (trademark) 7200 manufactured by Sumitomo 3M Limited), and perfluorohexyl methyl ether (C₂F₅CF(OCH₃)C₃F₇) (such as Novec (trademark) 7300 manufactured by Sumitomo 3M Limited), or CF₃CH₂OCF₂CHF₂ (such as Asahiklin (registered trademark) AE-3000 manufactured by Asahi Glass Co., Ltd.)). One of these solvents can be used singly, or two or more can be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable.

When using the dry coating method, the surface-treating agent of the present disclosure may be directly subjected to the dry coating method, or may be diluted with the above solvent before being subjected to the dry coating method.

A layer of the surface-treating agent is preferably formed such that the surface-treating agent of the present disclosure coexists in the layer with a catalyst for hydrolysis and dehydrative condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellet is obtained by impregnating a porous body of metal such as iron or copper with the surface-treating agent of the present disclosure to which the catalyst has been added.

The catalyst may be any suitable acid or base. The acid catalyst may be, for example, acetic acid, formic acid, or trifluoroacetic acid. The base catalyst may be, for example, ammonia or organic amine.

In the above-described manner, a layer derived from the surface-treating agent of the present disclosure is formed on the substrate surface, and the article of the present disclosure is produced. The layer thus obtained has both high surface lubricity and high friction durability. The layer may have not only high friction durability but also have, depending on the formulation of the surface-treating agent used, water-repellency, oil-repellency, antifouling properties (e.g., preventing grime such as fingerprints from adhering), waterproof properties (preventing water from entering electronic components and the like), surface lubricity (or lubricity, for example, such as removability by wiping of grim such as fingerprints, and excellent tactile sensations to the fingers), and the like, and may be suitably used as a functional thin film.

That is, the present disclosure further relates to an optical material having the surface-treating layer at the outermost layer.

The optical material preferably includes a wide variety of optical materials in addition to optical materials relating to displays and the like as exemplified below: for example, displays such as cathode ray tubes (CRTs; e.g., PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article having a layer obtained according to the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for devices such as mobile phones and personal digital assistants; disc surfaces of optical discs such as Blu-ray (R) discs, DVD discs, CD-Rs, and MOs; optical fibers; and display surfaces of watches and clocks.

The article having a layer obtained according to the present disclosure may be medical equipment or a medical material.

The thickness of the layer is not limited. The thickness of the layer in the case of an optical member is in the range of 1 to 50 nm, 1 to 30 nm, and preferably 1 to 15 nm, from the viewpoint of optical performance, surface lubricity, friction durability, and antifouling property.

The present disclosure has been described in detail above. The present disclosure is not limited to those exemplified above.

### Examples

Hereinafter, a surface-treating agent of the present disclosure will be described in Examples, but the present disclosure is not limited to the following Examples. In this Examples, all the chemical formulae shown below represent average compositions.

### NMR Test Method

In the following Examples, NMR was obtained as follows. A sample was analyzed by a ²⁹Si-nuclear magnetic resonance (NMR) spectrometer (Bruker AV III 600 Spectrometer) operating at a magnetic field strength of 14.1 T. The sample was added to a 10 mm NMR tube and diluted with Novec 7100 to a concentration of 10 to 30%. An inverse-gated-decoupling pulse sequence was used with a pulse width of 45° (²⁹Si: 25 sec delay, 1.42 sec AQ).

### Synthetic Example 1: Synthesis of Fluoroalkylsilane Oligomer (Compound 1)

### Synthetic Example 1-1 (Synthesis of Compound 1-1)

1H,1H,2H,2H-Perfluorooctyltrimethoxysilane (15.0 g, 32 mmol) was dissolved in acetone (30.0 g). A 0.05N HCl aqueous solution (721.5 mg) (molar ratio, silane/water = about 1/1.25) was added to the acetone solution while stirring at room temperature. The reaction mixture was monitored by gas chromatography. The volatile components were removed by evaporation at 50°C under 50 mmHg while purging N₂. A colorless to grayish residue oil was filtered. The product was insoluble in general-purpose organic solvents and soluble in fluorinated solvents. The content ratio of OCH₃ to Si in the obtained compound 1-1 was 2.0 (molar ratio).

As a result of determining the weight average molecular weight (Mw) and the number average molecular weight (Mn) by GPC measurement as described below, Mw was 4,217 and Mn was 2,837.

### (GPC Measurement)

The weight average molecular weight (Mw) and the number average molecular weight (Mn) were measured using the following columns [manufactured by Showa Denko KK] connected in series in this order. Note that the molecular weights were calibrated using perfluorinated polyether oils A, B, and C.
- Calibration samples
   Perfluorinated polyether oil A: number average molecular weight 7,250, Mw/Mn 1.08
   Perfluorinated polyether oil B: number average molecular weight 4,180, Mw/Mn 1.08
   Perfluorinated polyether oil C: number average molecular weight 2,725, Mw/Mn 1.08
- Columns
   GPC KF-G (4.6 mm I.D. × 1 cm)
   GPC KF806L (8.0 mm I.D. × 30 cm)
   GPC KF806L (8.0 mm I.D. × 30 cm)
- Device
   GPCmax (HPLC system) and TDA-302 (detector) manufactured by Malvern Instruments
- Eluent
   Asahiklin AK225 (HCFC-225) / 1,1,1,3,3,3-hexafluoro-2-propanol [90/10 (w/w)]
- Sample concentration
   20 mg/mL

²⁹Si-NMR of the obtained fluoroalkylsilane oligomer mixture: T⁰, 0% (40-48 ppm), T¹, 12.57% (48-54 ppm), T², 63.74% (54-63 ppm), T³, 23.68% (63-75 ppm).

### Synthetic Example 1-2 (Synthesis of Compound 1-2)

1H,1H,2H,2H-Perfluorooctyltrimethoxysilane (23.42 g, 50 mmol) was dissolved in acetone (46.8 g). A 0.05N HCl aqueous solution (901 mg) (molar ratio, silane/water = about 1/1) was added to the acetone solution while stirring at room temperature. The reaction mixture was monitored by gas chromatography. The volatile components were removed by evaporation at 50°C under 50 mmHg while purging N₂. A colorless to grayish oil was filtered. The product was insoluble in general-purpose solvents and soluble in fluorinated solvents. The content ratio of OCH₃ to Si in the obtained compound 1-2 was 2.25 (molar ratio).

The weight average molecular weight (Mw) and number average molecular weight (Mn) were measured by GPC in the same manner as described above.

### Mw: 3,515, Mn: 2,416

²⁹Si-NMR of the obtained fluoroalkylsilane oligomer mixture: T⁰, 0.96% (40-48 ppm), T¹, 15.09% (48-54 ppm), T², 35.14% (54-63 ppm), T³, 49.31% (63-75 ppm).

### Synthetic Example 2: Preparation of Perfluoroalkyl Group-Containing Silane Compound (Compound 2)

As the compound 2, the following compound was synthesized in the same manner as the compound F in Synthetic Example 6 of JP 2019-70098. Specifically, CF₃CF₂CF₂O(CF₂CF₂CF₂O)₃₀CF₂CF₂CONHCH₂C(CH₂CH=CH₂)₃ (5.0g), 1,3-bis(trifluoromethyl)benzene (8ml) and trichlorosilane (1.10 g) were charged in a 50 mL four-neck flask equipped with a reflux condenser, a thermometer, and a stirrer, and the mixture was stirred under a nitrogen stream at 5°C for 30 minutes. Subsequently, a xylene solution (0.11 ml) containing a Pt complex of 1,3-divinyl-1,1,3,3-tetramethyldisiloxane at 2% was added, and the mixture was then heated to 60°C, and stirred at this temperature for 4 hours. The volatiles were then distilled off under reduced pressure. Subsequently, 1,3-bis(trifluoromethyl)benzene (8 ml) was added and the mixture was stirred at 55°C for 10 minutes. Then, a mixed solution of methanol (0.16 g) and trimethyl orthoformate (5.36 g) was added and the mixture was stirred at this temperature for 2 hours. The following compound 2 was then obtained by distilling off the volatiles under reduced pressure.

Compound 2: CF₃CF₂CF₂O(CF₂CF₂CF₂O)₃₀CF₂CF₂CONHCH₂C[CH₂CH₂CH₂Si(OCH₃)₃]₃

### Preparation of Surface-Treating Agents 1 to 7

The compound 1-1 and the compound 1-2 obtained in Synthetic Examples 1-1 and 1-2, and the compound 2 obtained in Synthetic Example 2 were mixed in the mass ratios shown in Table 1, and the mixtures were dissolved in hydrofluoroether (3M Japan Limited, Novec HFE7200) to a concentration of 20% by mass to obtain the surface-treating agents 1 to 7. Specifically, the compound 2 and HFE7200 were first added to a container in this order and the mixture was stirred at 25°C for 30 minutes. Then, the compound 1 was added and the mixture was stirred at 25°C for 30 minutes.

### Examples 1 to 7

The surface-treating agents 1 to 7 obtained above were each vacuum-deposited on a chemically tempered glass ("Gorilla" glass, manufactured by Corning Incorporated, thickness 0.7 mm). The treatment conditions for vacuum deposition were a pressure of 3.0 × 10⁻³ Pa. First, a silicon dioxide film was formed on the surface of the chemically tempered glass by the electron beam deposition method. Subsequently, 2 mg of the surface-treating agent (i.e., containing 0.4 mg of the surface-treating agent) was deposited per sheet of the chemically tempered glass. Thereafter, the chemically tempered glass with a deposited film was left to stand in an atmosphere at a temperature of 20°C and a humidity of 65% for 24 hours to form the surface-treating layers of Examples 1 to 7 on the chemically tempered glass.

### Comparative Example 1

A surface-treating layer was formed in the same manner as in the above Examples, except that only the compound 2 obtained in Synthetic Example 2 was used instead of the surface-treating agents 1 to 7.

**[Table 1]**

| | Composition | Mass ratio (% by mass) | | |
|---|---|---|---|---|
| | | Compound 1-1 | Compound 1-2 | Compound 2 |
| Example 1 | 1 | 0.5 | 0 | 99.5 |
| Example 2 | 2 | 1 | 0 | 99 |
| Example 3 | 3 | 5 | 0 | 95 |
| Example 4 | 4 | 10 | 0 | 90 |
| Example 5 | 5 | 0 | 0.5 | 99.5 |
| Example 6 | 6 | 0 | 1 | 99 |
| Example 7 | 7 | 0 | 5 | 95 |
| Comparative Example 1 | Compound 2 | 0 | 0 | 100 |

### Friction Durability Test

The static water contact angle was measured for the surface-treating layers formed of the surface-treating agents 1 to 7 (Examples 1 to 7) and the surface-treating layer formed of the compound 2 (Comparative Example 1) on the surface of the substrate as described above. The measurement of the static water contact angle was performed using a contact angle measurement apparatus (manufactured by Kyowa Interface Science Co., Ltd.) with 1 µL of water.

First, as an initial evaluation, after the surface-treating layer was formed, the static water contact angle of the surface with which nothing was brought into contact yet was measured (friction frequency: 0).

Then, as an evaluation of friction durability, the steel wool friction durability was evaluated. Specifically, a substrate provided with a surface-treating layer was horizontally placed, steel wool (size #0000, dimension 5 mm × 10 mm × 10 mm) was brought into contact with the exposed upper surface of the surface-treating layer, a load of 1,000 gf was applied thereto, and, thereafter, with the load being applied, the steel wool was moved back and forth at a speed of 140 mm/sec. The static water contact angle (degrees) was measured every 1,000 round trips. Note that the evaluation was conducted until the number of reciprocations reached 10,000, or until the measured contact angle was less than 80°. The results are shown in Table 2 ("-" are unmeasured).

**[Table 2]**

| | E1 | E2 | E3 | E4 | E5 | E6 | E7 | C1 |
|---|---|---|---|---|---|---|---|---|
| 0 | 112 | 112 | 112 | 112 | 113 | 113 | 112 | 112 |
| 1000 | 109 | 110 | 110 | 109 | 112 | 111 | 111 | 108 |
| 2000 | 104 | 108 | 106 | 102 | 110 | 109 | 108 | 101 |
| 3000 | 99 | 104 | 101 | 97 | 109 | 107 | 106 | 93 |
| 4000 | 90 | 100 | 96 | 86 | 107 | 104 | 103 | 83 |
| 5000 | 86 | 94 | 89 | 80 | 106 | 103 | 100 | 76 |
| 6000 | 79 | 88 | 83 | 75 | 104 | 99 | 96 | - |
| 7000 | - | 80 | 76 | - | 102 | 97 | 93 | - |
| 8000 | - | 76 | - | - | 98 | 91 | 87 | - |
| 9000 | - | - | - | - | 94 | 88 | 83 | - |
| 10000 | - | - | - | - | 91 | 84 | 78 | - |

The above "E1" to "E7" refer to Examples 1 to 7, respectively, and "C1" refers to Comparative Example 1.

As is apparent from the above results, the Examples 1 to 7, which used a surface-treating agent containing a fluoroalkylsilane oligomer mixture and a perfluoroalkyl group-containing silane compound, showed higher frictional durability than the Comparative Example 1, which used a surface-treating agent containing no fluoroalkylsilane oligomer mixture.

### Industrial Applicability

The surface-treating agent of the present disclosure can be suitably utilized to form a surface-treating layer on the surface of a variety of substrates, in particular optical members for which transparency is required.

## Claims

1. A surface-treating agent comprising:
(1) a fluoroalkylsilane oligomer mixture; and
(2) a perfluoroalkyl group-containing silane compound,
wherein the fluoroalkylsilane oligomer mixture comprises a partially hydrolyzed condensate of a fluoroalkylsilane compound represented by the following formula (I):
R^{f1}-Q¹-SiR¹ₚX¹₃₋ₚ (I)
wherein
R^{f1} is CₗF₂ₗ₊₁;
1 is an integer of 1 to 10;
Q¹ is a single bond or a divalent hydrocarbon group having 1 to 6 carbon atoms;
R¹ is each independently a monovalent hydrocarbon group having 1 to 6 carbon atoms;
X¹ is each independently a hydroxyl group or a hydrolyzable group; and
p is an integer of 0 to 2, and
the perfluoroalkyl group-containing silane compound is a compound represented by the following formula (II):
[A]_{b1}Q²[B]_{b2} (II)
wherein
Q² is a linking group having a valence of (b1+b2);
A is a group represented by R^{f3}-O-R^{f2}-;
R^{f2} is a poly(oxyfluoroalkylene) chain;
R^{f3} is a perfluoroalkyl group;
B is a monovalent group having one -R¹²- (SiR²ᵣX²₃₋ᵣ) and no fluorine atoms;
R¹² is a hydrocarbon group having 2 to 10 carbon atoms which optionally have an ethereal oxygen atom between carbon atoms or at the end opposite the end to which Si is bonded, or optionally have -NH- between carbon atoms;
R² is each independently a hydrogen atom or an optionally substituted monovalent hydrocarbon group having 1 to 6 carbon atoms;
X² is each independently a hydroxyl group or a hydrolyzable group;
r is an integer of 0 to 2;
Q² and B do not contain a cyclic siloxane structure;
b1 is an integer of 1 to 3; and
b2 is an integer of 2 to 9;
provided that, when b1 is two or more, b1 number of A may be the same or different, and b2 number of B may be the same or different.

2. The surface-treating agent according to claim 1, wherein R^{f2} in the formula (II) is a group represented by - (CaF₂ₐO)ₙ-, wherein a is an integer of 1 to 6, n is an integer of 2 or more, and each -CₐF₂ₐO- unit may be the same or different.

3. The surface-treating agent according to claim 1 or 2, wherein R^{f2} in the formula (II) is a group represented by - (CF₂CF₂CF₂CF₂CF₂CF₂O)ₙ₁-(CF₂CF₂CF₂CF₂CF₂O)ₙ₂-(CF₂CF₂CF₂CF₂O)ₙ₃-(CF₂CF₂CF₂O)ₙ₄-(CF(CF₃)CF₂O)ₙ₅-(CF₂CF₂O)ₙ₆-(CF₂O)ₙ₇-wherein n1, n2, n3, n4, n5, n6, and n7 are each independently an integer of 0 or more, the sum of n1, n2, n3, n4, n5, n6, and n7 is 2 or more, and each repeating unit may be present in a block, alternating, or random manner.

4. The surface-treating agent according to any one of claims 1 to 3, wherein the fluoroalkylsilane compound represented by the formula (I) is a compound represented by the formula (I-1) or (I-2)
CF₃(CF₂)₁₋₁-(CH₂)ₜ-SiX¹₃ (I-1)
CF₃(CF₂)₁₋₁-(CH₂)ₜ-SiR¹X¹₂ (1-2)
wherein 1 is an integer of 1 to 10, t is an integer of 1 to 6, and X¹ and R¹ have the same meaning as described in claim 1.

5. A surface-treating agent comprising:
(1) a fluoroalkylsilane oligomer mixture; and
(2) a perfluoroalkyl group-containing silane compound,
wherein the fluoroalkylsilane oligomer mixture comprises a partially hydrolyzed condensate of a fluoroalkylsilane compound represented by the following formula (I):
R^{f1}-Q¹-SiR¹ₚX¹₃₋ₚ (I)
wherein
R^{f1} is CₗF₂ₗ₊₁;
1 is an integer of 1 to 10;
Q¹ is a single bond or a divalent hydrocarbon group having 1 to 6 carbon atoms;
R¹ is each independently a monovalent hydrocarbon group having 1 to 6 carbon atoms;
X¹ is each independently a hydroxyl group or a hydrolyzable group; and
p is an integer of 0 to 2, and
the perfluoroalkyl group-containing silane compound is a compound represented by any of the following formulae (A1), (A2), (B1), (B2), (C1), and (C2):
(Rf - PFPE) _{β'} - X⁵ -(SiR²¹ₙ₁R²²₃₌ₙ₁)_{β} ··· (A1)
(R²²₃₋ₙ₁R²¹ₙ₁Si)_{β} - X⁵-PFPE- X⁵ - (SiR²¹ₙ₁R²²₃₁ₙ₁)_{β} ··· (A2)
(Rf-PFPE)_{γ'}- X⁷- (SiR^{a}ₖ₁R^{b}ₗ₁R^{c}ₘ₁)_{γ} ··· (B1)
(R^{c}ₘ₁R^{b}ₗ₁R^{a}ₖ₁Si)_{γ} - X⁷ - PFPE - X⁷- (SiR^{a}ₖ₁R^{b}ₗ₁R^{c}ₘ₁)_{γ} ··· (B2)
(Rf - PFPE)_{δ'} - X⁹ - (CR^{d}ₖ₂R^{e}ₗ₂R^{f}ₘ₂)_{δ} ··· (C1)
(R^{f}ₘ₂R^{e}ₗ₂R^{d}ₖ₂C)_{δ}- X⁹ - PFPE - X⁹ - (CR^{d}ₖ₂R^{e}ₗ₂R^{f}ₘ₂)_{δ} ··· (C2)
wherein
PFPE is each independently at each occurrence a group represented by formula:
- (OC₄F₈)ₐ- (OC₃F₆)_{b}- (OC₂F₄)_{c}- (OCF₂)_{d}-
wherein a, b, c, and d are each independently an integer of 0 to 200, the sum of a, b, c, and d is at least 1, and the occurrence order of the respective repeating units enclosed in parentheses provided with subscripts a, b, c, and d is not limited in the formula;
Rf is each independently at each occurrence an alkyl group having 1 to 16 carbon atoms, optionally substituted with one or more fluorine atoms;
R²¹ is each independently at each occurrence a hydroxyl group or a hydrolyzable group;
R²² is each independently at each occurrence a hydrogen atom or an alkyl group having 1 to 22 carbon atoms;
n1 is an integer of 0 to 3 independently in each (-SiR²¹ₙ₁R²²₃₋ₙ₁) unit;
provided that at least one n1 in formulae (A1) and (A2) is an integer of 1 to 3;
X⁵ each independently represents a single bond or a dito decavalent organic group;
β is each independently an integer of 1 to 9;
β' is each independently an integer of 1 to 9;
X⁷each independently represents a single bond or a dito decavalent organic group;
γ is each independently an integer of 1 to 9;
γ' is each independently an integer of 1 to 9;
R^{a} is each independently at each occurrence -Z¹-SiR⁷¹ₚ₁R⁷²_{q1}R⁷³ ᵣ₁ ;
Z¹ is each independently at each occurrence an oxygen atom or a divalent organic group;
R⁷¹ is each independently at each occurrence R^{a'};
R^{a'} has the same meaning as R^{a};
in R^{a}, the number of Si atoms linearly linked via a group Z¹ is at most 5;
R⁷² is each independently at each occurrence a hydroxyl group or a hydrolyzable group;
R⁷³ is each independently at each occurrence a hydrogen atom or a lower alkyl group;
p1 is each independently at each occurrence an integer of 0 to 3;
q1 is each independently at each occurrence an integer of 0 to 3;
r1 is each independently at each occurrence an integer of 0 to 3;
provided that at least one q1 in formulae (B1) and (B2) is an integer of 1 to 3;
R^{b} is each independently at each occurrence a hydroxyl group or a hydrolyzable group;
R^{c} is each independently at each occurrence a hydrogen atom or a lower alkyl group;
k1 is each independently at each occurrence an integer of 1 to 3;
l1 is each independently at each occurrence an integer of 0 to 2;
m1 is each independently at each occurrence an integer of 0 to 2;
provided that, in the unit enclosed in parentheses provided with γ, the sum of k1, 11 and m1 is 3;
X⁹ each independently represents a single bond or a dito decavalent organic group;
δ is each independently an integer of 1 to 9;
δ' is each independently an integer of 1 to 9;
R^{d} is each independently at each occurrence -Z²-CR⁸¹ₚ₂R⁸²_{q2}R⁸³ᵣ₂ ;
Z² is each independently at each occurrence an oxygen atom or a divalent organic group;
R⁸¹ is each independently at each occurrence R^{d'} ;
R^{d'} has the same meaning as R^{d}_{;}
in R^{d}, the number of C atoms linearly linked via a group Z² is at most 5;
R⁸² is each independently at each occurrence -Y-SiR⁸⁵ₙ₂R⁸⁶₃₋ₙ₂ ;
Y is each independently at each occurrence a divalent organic group;
R⁸⁵ is each independently at each occurrence a hydroxyl group or a hydrolyzable group;
R⁸⁶ is each independently at each occurrence a hydrogen atom or a lower alkyl group;
n2 represents an integer of 0 to 3 independently in each (-Y-SiR⁸⁵ₙ₂R⁸⁶₃₋ₙ₂) unit;
provided that at least one n2 in formulae (C1) and (C2) is an integer of 1 to 3;
R⁸³ is each independently at each occurrence a hydrogen atom, a hydroxyl group, or a lower alkyl group;
p2 is each independently at each occurrence an integer of 0 to 3;
q2 is each independently at each occurrence an integer of 0 to 3;
r2 is each independently at each occurrence an integer of 0 to 3;
R^{e} is each independently at each occurrence -Y-SiR⁸⁵ₙ₂R⁸⁶₃₋ₙ₂;
R^{f} is each independently at each occurrence a hydrogen atom, a hydroxyl group, or a lower alkyl group;
k2 is each independently at each occurrence an integer of 0 to 3;
12 is each independently at each occurrence an integer of 0 to 3; and
m2 is each independently at each occurrence an integer of 0 to 3;
provided that, in the formulae (C1) and (C2), at least one q2 is 2 or 3 or at least one l2 is 2 or 3.

6. The surface-treating agent according to claim 5, wherein Rf is a perfluoroalkyl group having 1 to 16 carbon atoms.

7. The surface-treating agent according to claim 5 or 6, wherein PFPE is a group represented by any of the following formulae (i) to (iv):
- (OCF₂CF₂CF₂)_{b}- (i)
wherein b is an integer of 1 to 200;
- (OCF (CF₃)CF₂)_{b}- (ii)
wherein b is an integer of 1 to 200;
- (OCF₂CF₂CF₂CF₂)ₐ-(OCF₂CF₂CF₂)_{b}-(OCF₂CF₂)_{c}-(OCF₂)_{d}- (iii)
wherein a and b are each independently an integer of 0 or 1 to 30, c and d are each independently an integer of 1 to 200, and the occurrence order of the respective repeating units enclosed in parentheses provided with subscripts a, b, c, and d is not limited in the formula;
or
- (R⁷-R⁸)_{f}- (iv)
wherein R⁷ is each independently at each occurrence OCF₂ or OC₂F₄, and R⁸ is each independently at each occurrence a group selected from OC₂F₄, OC₃F₆, and OC₄F₈, or a combination of two or three groups independently selected from these groups; and
f is an integer of 2 to 100.

8. The surface-treating agent according to any one of claims 5 to 7, wherein k1 is 3 and q1 in R^{a} is 3.

9. The surface-treating agent according to any one of claims 5 to 8, wherein l2 is 3 and n2 is 3.

10. The surface-treating agent according to any one of claims 5 to 9, wherein Y represents a C₁₋₆ alkylene group, - (CH2)_{g'}-O-(CH2)_{h'}-, wherein g' is an integer of 0 to 6 and h' is an integer of 0 to 6, or -phenylene-(CH₂)_{i'}-, wherein i' is an integer of 0 to 6.

11. The surface-treating agent according to any one of claims 5 to 10, wherein X⁵, X⁷, and X⁹ are each independently a di- to tetravalent organic group, β, γ and δ are each independently 1 to 3, and β', γ' and δ ' are 1.

12. The surface-treating agent according to any one of claims 5 to 11, wherein X⁵, X⁷, and X⁹ are a divalent organic group, β, γ and δ are 1, and β', γ' and δ' are 1.

13. The surface-treating agent according to any one of claims 5 to 12, wherein X⁵, X⁷, and X⁹ are each independently a group represented by - (R³¹)_{p'}- (X^{a})_{g'} -
wherein
R³¹ each independently represents a single bond, - (CH₂)_{s'}-, wherein s' is an integer of 1 to 20, or an o-, m- or p-phenylene group;
X^{a} represents -(X^{b})_{l'}-, wherein l' is an integer of 1 to 10;
X^{b} is each independently at each occurrence a group selected from the group consisting of -O-, -S-, an o-, m- or p-phenylene group, -C(O)O-, -Si (R³³)₂-, - (Si (R³³)₂O)_{m'}-Si(R³³)₂-, wherein m' is an integer of 1 to 100, -CONR³⁴-, - O-CONR³⁴-, -NR³⁴- and -(CH₂)_{n'}-, wherein n' is an integer of 1 to 20;
R³³ is each independently at each occurrence a phenyl group, a C₁₋₆ alkyl group, or a C₁₋₆ alkoxy group;
R³⁴ is each independently at each occurrence a hydrogen atom, a phenyl group, or a C₁₋₆ alkyl group;
p' is 0, 1, or 2;
q' is 0 or 1;
provided that at least one of p' and q' is 1, and the occurrence order of the respective repeating units in parentheses provided with p' or q' is not limited in the formula; and
R³¹ and X^{a} are optionally substituted with one or more substituents selected from a fluorine atom, a C₁₋₃ alkyl group, and a C₁₋₃ fluoroalkyl group.

14. The surface-treating agent according to any one of claims 5 to 13, wherein X⁵, X⁷, and X⁹ are each independently:
a single bond, or -Rf'-X¹⁰-
wherein X¹⁰ is a group selected from the group consisting of:
-CH₂O(CH₂)₂-,
-CH₂O(CH₂)₃-,
-CH₂O(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂- ,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH2) 3Si (CH₃)₂O(Si(CH₃)₂O)₂₀Si(CH₃)₂(CH₂)₂-,
-CH₂OCF₂CHFOCF₂-,
-CH₂OCF₂CHFOCF₂CF₂- ,
-CH₂OCF₂CHFOCF₂CF₂CF₂- ,
-CH₂OCH₂CF₂CF₂OCF₂- ,
-CH₂OCH₂CF₂CF₂OCF₂CF₂- ,
-CH₂OCH₂CF₂CF₂OCF₂CF₂CF₂- ,
- CH₂OCH₂CF₂CF₂0CF(CF₃)CF₂OCF₂- ,
-CH₂OCH₂CF₂CF₂OCF(CF₃)CF₂OCF₂CF₂- ,
-CH₂OCH₂CF₂CF₂OCF(CF₃)CF₂OCF₂CF₂CF₂-,
-CH₂OCH₂CHFCF₂OCF₂ -,
-CH₂OCH₂CHFCF₂OCF₂CF₂- ,
-CH₂OCH₂CHFCF₂OCF₂CF₂CF₂- ,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂C_{F2}CF₂-,
CH₂OCH₂(CH₂)₇CH₂Si(OCH₃)₂OSi(OCH₃)₂(CH₂)₂Si(OCH₃)₂OSi(OCH₃)₂(CH_{2 2}-,
-CH₂OCH₂CH₂CH₂Si(OCH₃)₂OSi(OCH₃)₂(CH₂)₃-,
CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
- (CH₂)₂-,
- (CH₂)₃-,
- (CH₂)₄-,
- (CH₂)₅-,
- (CH₂)₆-,
- (CH₂)₂-Si(CH₃)₂-(CH₂)₂-,
-CONH-(CH₂)-,
-CONH-(CH₂)₂-,
-CONH-(CH₂)₃-,
-CON(CH₃)-(CH₂)₃-,
-CON(Ph)-(CH₂)₃-, wherein Ph means phenyl,
-CONH-(CH₂)₆-,
-CON(CH₃)-(CH₂)₆-,
-CON(Ph)-(CH₂)₆-, wherein Ph means phenyl,
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
- (CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂OSi(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-,
-OCFHCF₂-, 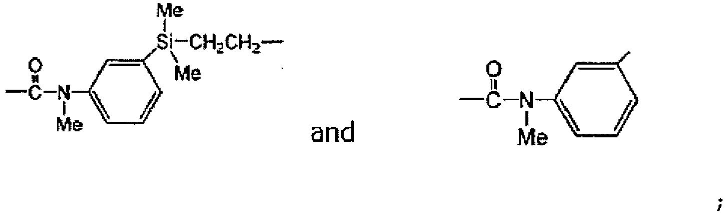 Rf' is a single bond or - (C_{l'}F_{2l'})-; and
1' is an integer of 1 to 4.

15. The surface-treating agent according to any one of claims 5 to 10, wherein X⁵, X⁷, and X⁹ are each independently a tri- to decavalent organic group.

16. The surface-treating agent according to claim 15, wherein X⁵, X⁷, and X⁹ are each independently selected from the group consisting of: 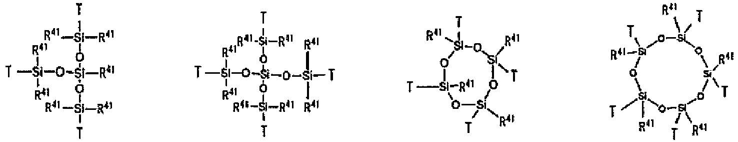 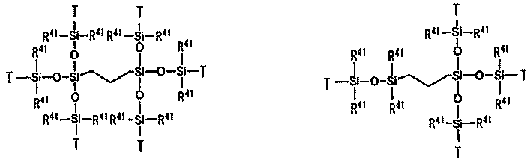 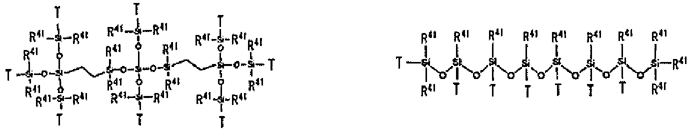 wherein in each group, at least one T is the following group bonded to PFPE in the formulae (A1), (A2), (B1), (B2), (C1) and (C2):
-Rf'-X¹¹-
wherein X¹¹ is a group selected from the group consisting of
-CH₂O(CH₂)₂- ,
-CH₂O(CH₂)₃- ,
-CF₂O(CH₂)₃-,
- (CH₂)₂-,
- (CH₂)₃-,
- (CH₂)₄-,
-CONH-(CH₂)-,
-CONH-(CH₂)₂-,
-CONH-(CH₂)₃-,
-CON(CH₃)-(CH₂)₃-,
-CON(Ph)-(CH₂)₃-, wherein Ph means phenyl, and 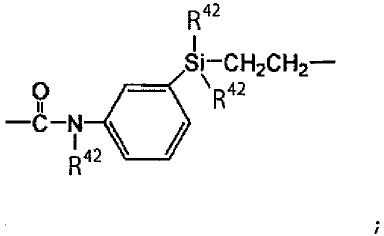 Rf' is a single bond or -(Cₗ,F_{2l'})-; and
l' is an integer of 1 to 4;
at least one other T is -(CH₂)ₙ-, wherein n is an integer of 2 to 6, bonded to a carbon atom or a Si atom in the formulae (A1), (A2), (B1), (B2), (C1) and (C2), and the other T, when present, are each independently a methyl group, a phenyl group, an alkoxy group having 1 to 6 carbon atoms, or a radical scavenging group or a UV absorbing group,
R⁴¹ is each independently a hydrogen atom, a phenyl group, an alkoxy group having 1 to 6 carbon atoms, or an alkyl group having 1 to 6 carbon atoms, and
R⁴² each independently represents a hydrogen atom, a C₁₋₆ alkyl group, or a C₁₋₆ alkoxy group.

17. The surface-treating agent according to any one of claims 1 to 16, wherein the number average molecular weight of the fluoroalkylsilane oligomer mixture is 300 or more.

18. The surface-treating agent according to any one of claims 1 to 17, wherein the number average molecular weight of the fluoroalkylsilane oligomer mixture is 4,500 or less.

19. The surface-treating agent according to any one of claims 1 to 18, wherein the content of the fluoroalkylsilane oligomer mixture is 20% by mass or less based on the total amount of the fluoroalkylsilane oligomer mixture and the perfluoroalkyl group-containing silane compound.

20. The surface-treating agent according to any one of claims 1 to 19, wherein the content of the fluoroalkylsilane oligomer mixture is 0.1% by mass or more based on the total amount of the fluoroalkylsilane oligomer mixture and the perfluoroalkyl group-containing silane compound.

21. An article comprising a substrate and a layer on a surface of the substrate, the layer being formed of the surface-treating agent according to any one of claims 1 to 20.

22. The article according to claim 21, which is an optical member.
